# EUROPEAN PATENT SPECIFICATION

(11) **EP 3 360 619 B1**
(45) Date of publication and mention of the grant of the patent: **04.09.2019**
(21) Application number: 17155707.7
(22) Date of filing: 10.02.2017
(51) Int. Cl.: B08B 1/00, B01D 46/00, B01D 46/10, B01D 46/48, F24F 3/16

(54) **A FILTER CLEANING DEVICE FOR AN AIR-CONDITIONER**
FILTERREINIGUNGSVORRICHTUNG FÜR EINE KLIMAANLAGE
DISPOSITIF DE NETTOYAGE DE FILTRE POUR UN CLIMATISEUR

(43) Date of publication of application: 15.08.2018
(73) Proprietor: Daikin Industries, Ltd., Osaka-shi, Osaka 530-8323 (JP); Daikin Europe N.V., 8400 Oostende (BE)
(72) Inventor: TANIGUCHI, Shinichi, 301 00 Plzen Skvrnany (CZ); JANDA, Zbynek, 301 00 Plzen Skvrnany (CZ)
(74) Representative: Global IP Europe Patentanwaltskanzlei

(56) References cited:
- EP-A1- 2 141 421
- EP-A1- 2 312 230
- WO-A1-2010/143230
- CN-A- 105 953 325
- JP-A- 2008 175 485
- US-A1- 2011 299 045

## Description

### Field of the Invention

The present invention relates to filter cleaning device for an air-conditioner.

### Background

Air-conditioners are generally installed with a filter for filtration of the air to be conditioned. The filter needs to be cleaned on a regular basis. The air-conditioner with a filter cleaning function is disclosed in JP 2009-192211 A.

JP 2009-192211 A discloses an air-conditioner which has a dust storing box which is configured to slidably move along a filter. The dust box includes a filter brush and a cleaning brush. The filter brush is a cylindrical shaped member covered with inclined pile cloth, and configured to rotate while being in contact with the filter. The cleaning brush is a curved plate member also covered with inclined pile cloth, and arranged so as to be in contact with the filter brush. By this, dust, fibres, particulate matter or the like (hereinafter simply referred to as "particles" or "dusts") are removed from the filter by the piles of the filter brush, and the removed particles are caught by the piles of the cleaning brush.

The amount of the particles adhering to the cleaning brush increases with time. This would decrease not only the function of the cleaning brush but also the function of the filter brush, resulting in a deterioration of the filter cleaning function.

In this regard, the directions of the piles of the filter brush and the cleaning brush are uniformed, and the filter brush is configured to be controlled to switch the rotation direction. Therefore, the particles adhering to the cleaning brush can be removed by the filter brush rotating inversely.

However, the inclined pile cloths need to meet in a wider area to allow the cleaning brush to remove the particles from the filter brush. On the other hand, the particles easily jam in such a wider area to stick to the inclined pile cloths of the cleaning brush. If the particles clot on the inclined pile cloths, the particles adhering to the filter brush would not be removed anymore, and the filter cleaning function would be deteriorated. Thus, with the above configuration, it is difficult to clean the filter efficiently.

EP 2 141 421 A1 discloses a filter cleaning device for an air-conditioner, comprising: a filter having a filter surface and configured to pass an air flow through the filter surface; a brush unit having a brush and at least one comb-like member, the brush being configured to contact with the filter surface, and being rotatably supported about a rotation axis that extends along the filter surface, and the at least one comb-like member being configured to comb bristles of the brush; a driving unit configured to rotate the brush about the rotation axis, and move at least one of the filter and the brush unit relative to each other such that a relative position of the brush relative to the filter moves along a first moving axis extending along the filter surface; and a controller configured to control the driving unit such that the relative position of the brush unit moves from one end side to the other end side of the filter with respect to the first moving axis within a predetermined cleaning period while the brush rotates in a first rotation direction, wherein the rotation axis of the brush extends along a direction that intersects the first moving axis; the controller is further configured to control the driving unit such that the brush rotates in a second rotation direction during or at the end of the cleaning period, the second rotation direction being opposite to the first rotation direction; the at least one comb-like member has a first comb-like member the teeth of which are configured to engage with the bristles of the brush at a predetermined depth and a predetermined angle with respect to the axis of the brush, and a second comb-like member the teeth of which configured to engage with the bristles of the brush at a predetermined depth and a predetermined angle with respect to the axis of the brush, and the teeth of one of the first comb-like member and the second comb-like member are configured to reach more deeply into the bristles of the brush than the teeth of the other comb-like member.

JP 2008 175485 A discloses a filter cleaning device for an air-conditioner, comprising: a filter having a filter surface and configured to pass an air flow through the filter surface; a brush unit having a brush and at least one comb-like member, the brush being configured to contact with the filter surface, and being rotatably supported about a rotation axis that extends along the filter surface, and the at least one comb-like member being configured to comb bristles of the brush; a driving unit configured to rotate the brush about the rotation axis, and move at least one of the filter and the brush unit relative to each other such that a relative position of the brush relative to the filter moves along a first moving axis extending along the filter surface; and a controller configured to control the driving unit such that the relative position of the brush unit moves from one end side to the other end side of the filter with respect to the first moving axis within a predetermined cleaning period while the brush rotates in a first rotation direction, wherein the rotation axis of the brush extends along a direction that intersects the first moving axis; the controller is further configured to control the driving unit such that the brush rotates in a second rotation direction during or at the end of the cleaning period, the second rotation direction being opposite to the first rotation direction; and the at least one comb-like member has a first comb-like member the teeth of which are configured to engage with the bristles of the brush at a predetermined depth and a predetermined angle with respect to the axis of the brush, and a second comb-like member the teeth of which configured to engage with the bristles of the brush at a predetermined depth and a predetermined angle with respect to the axis of the brush.

### Summary

The object of the present invention is to provide a filter cleaning device for an air-conditioner that cleans a filter more efficiently.

The object above is achieved by the filter cleaning device defined by the appended claim 1. Further advantageous effects can be obtained by the preferred embodiments defined by appended dependent claims.

A reference example of a filter cleaning device is a device for an air-conditioner comprising a filter, a brush unit, a driving unit and a controller. The filter has a filter surface and configured to pass an air flow through the filter surface. The brush unit has a brush and at least one comb-like member. The brush is configured to contact with the filter surface, and rotatably supported about a rotation axis that extends along the filter surface. The at least one comb-like member is configured to comb bristles of the brush. The driving unit is configured to rotate the brush about the rotation axis, and move at least one of the filter and the brush unit relative to each other such that a relative position of the brush relative to the filter moves along a first moving axis extending along the filter surface. The controller is configured to control the driving unit such that the relative position of the brush unit moves from one end side to the other end side of the filter with respect to the first moving axis within a predetermined cleaning period while the brush rotates in a first rotation direction. The rotation axis of the brush extends along a direction that intersects the first moving axis. The controller is configured to control the driving unit such that the brush rotates at least partially in a second rotation direction during or at the end of the cleaning period, the second rotation direction being opposite to the first rotation direction.

The first moving axis maybe a linear line or a curved line along which the brush unit can slide. In practice, it is preferable to arrange a pair of guide rails which extend along the filter surface and guide the filter and/or brush unit.

The brush rotates in the first rotation direction while the brush unit moves relative to the filter along the first moving axis during the cleaning period. The brush moves such that it contacts with the filter surface from one end side to the other end side of the filter. The brush rotates at least partially in the second rotation direction during and/or at the end of the cleaning period.

The brush preferably rotates in the second rotation direction by at least a rotation angle. The surface of revolution of the brush is a surface of revolution of the outer ends of the bristles of the brush. In other words, the brush rotates in the second rotation direction such that clouds of dusts, which moved back from the comb-like member onto the bristles of the brush upon switching the rotation directions, hit against the comb-like member.

Compared to the conventional configuration, the filter cleaning device mentioned above employs the comb-like member instead of an inclined pile cloth. The comb-like member can efficiently remove the particles adhering to the brush without forming a wide area sandwiched between the comb-like member and the brush. Thus, not only the particles adhering to the brush but also the particles adhering to the comb-like member are more easily removed, and therefore it is possible to clean the filter more efficiently.

According to a preferred reference example of the filter cleaning device mentioned above, the at least one comb-like member has a first comb-like member configured to comb the bristles of the brush rotating in a first rotation direction, and a second comb-like member configured to comb the bristles of the brush rotating in the second rotation direction.

Preferably, the first comb-like member and the second comb-like member are disposed at different angles to the surface of revolution of the brush. Furthermore preferably, teeth of each comb-like member are oriented towards upstream side relative to a direction toward the rotation axis of the brush in the corresponding rotation direction. Thereby, each comb-like member can contact with the bristles with an effective angle when the brush rotates in a corresponding rotation direction.

According to another preferred reference example of the filter cleaning device with the first comb-like member and the second comb-like mentioned above, each of the first comb-like member and the second comb-like member has teeth configured to comb the bristles of the brush, and the teeth of the first comb-like member and the second comb-like member are configured to reach to substantially the same depth in the bristles of the brush.

With the configuration above, each comb-like member effectively comb the bristles of the brush rotating in the corresponding rotation direction. Preferably, the teeth of each comb-like member reach to the middle part of the bristles of the brush to remove particles such as dusts from the bristles. Preferably, the teeth of each comb-like member contact with outer portions of the bristles to scratch off clouds of dusts on the bristles.

The material, shape, and arrangement of the comb-like member is selected and adjusted in accordance with the design of the brush such as the material, density, length of the bristles.

According to another preferred reference example of the filter cleaning device with the first comb-like member and the second comb-like mentioned above, each of the first comb-like member and the second comb-like member has teeth configured to comb the bristles of the brush, and the teeth of one of the first comb-like member and the second comb-like member are configured to reach more deeply into the bristles of the brush than the teeth of the other comb-like member.

The first comb-like member has longer teeth than the second comb-like member, for example. Clouds of dusts stored on the first comb-like member move onto the bristles upon switching the rotation direction of the brush. The second comb-like member can effectively scratch off the clouds of dusts with its shorter teeth when the clouds of dusts reach to and hit against the teeth of the second comb-like member.

According to further another preferred reference example of any one of the filter cleaning device with the first comb-like member and the second comb-like mentioned above, at least one of the first comb-like member and the second comb-like member has a main comb and a corresponding sub comb, the main comb and the corresponding sub comb being spaced away on a surface of revolution of the brush, and teeth of the main comb are configured to reach more deeply into the bristles of the brush than teeth of the corresponding sub comb.

Preferably, the main comb and sub comb are disposed for each of the first and second rotation direction of the brush. Thereby, dusts stored at a main comb can be effectively scratched off by a sub comb. More preferably, a comb for the first rotation direction and a comb for the second rotation direction are arranged alternately with respect to the first and second rotation directions. Even more preferably, the sub comb for the second rotation direction is disposed on upstream side of the main comb for the first rotation direction with respect to the first rotation direction of the brush. Likewise, the sub comb for the first rotation is disposed on upstream side of the main comb for the second rotation with respect to the second rotation direction of the brush.

According to further another preferred reference example of any one of the filter cleaning device with the combs which are different in how deeply the teeth reach into the bristles, mentioned above, the controller is configured to drive the driving unit such that the brush rotates by a rotation angle in the second rotation direction; and the rotation angle is equal to or more than an angle corresponding to a distance between the first comb-like member and the second comb-like member on a surface of revolution of the brush.

The clouds of dusts have been accumulated at the one of the comb-like members during the first rotation period of the brush. With the configuration above, the accumulated clouds of dusts can securely reach to the other comb-like member after switching the rotation directions and be scratched off. Thereby, the clouds of dusts can be removed from the brush in a more secure manner.

Preferably, the rotation angle corresponds to the distance between the first comb-like member and the second comb-like member on a surface of revolution of the brush. Thereby, the rotation period in the second rotation direction can be minimized. Accordingly, the total cleaning period can be reduced as well.

According to further another preferred reference example of any one of the filter cleaning device mentioned above, the controller is configured to control the driving unit such that the brush completely rotates once at most in the second rotation direction.

Preferably, the brush rotates in the second rotation direction by 360 degree at most. Thereby, the brush can be effectively cleaned in a shorter time period. More preferably, the brush alternately repeats to rotate in the both rotation directions. Each rotation for cleaning the brush is preferably up to 360 degree in each rotation direction.

According to further another preferred reference example of any one of the filter cleaning device mentioned above, the controller is configured to control the driving unit such that the brush alternately rotates in both rotating directions after the predetermined cleaning period has passed at least partially.

Preferably, the brush rotates up to substantially 360 degree in each rotation direction. The brush can be effectively cleaned by switching the rotation directions quickly.

The cleaning of the brush is preferably performed after carrying out the cleaning of the filter. In this case, the brush rotates entirely or partially in the second rotation direction after the predetermined cleaning period. The brush then rotates entirely or partially in the first rotation direction again, for example.

In another preferable reference example, the cleaning of the brush is performed after partially carrying out the cleaning of the filter. In this case, the brush rotates entirely or partially in the second rotation direction after, for example, half the cleaning period has passed. The brush further rotates entirely or partially in the first rotation direction and then in the second rotation direction. After that, the brush starts rotating again in the first rotation direction to complete the cleaning of the filter.

It is not limited how many times the brush should switch the rotation directions. It is adjusted in accordance with time requirement and environment around the air-conditioner.

According to further another preferred reference example of any one of the filter cleaning device mentioned above, the controller is configured to rotate the brush in the second rotation direction at the end of the predetermined cleaning period.

With the configuration above, the brush is cleaned after the first cleaning of the filter. Therefore, the brush can effectively clean the filter again when the second cleaning starts. In particular, it is preferable to clean the brush directly after the first cleaning of the filter when the second cleaning of the filter is to be performed immediately after the first cleaning.

According to further another preferred reference example of any one of the filter cleaning device mentioned above, a controller configured to control the driving unit such that: the brush unit and the filter move in a first moving direction and second moving direction, respectively, along the first moving axis within the predetermined cleaning period while the brush rotates in a first rotation direction, the first moving direction and second moving direction being opposite, and the brush unit and the filter move in the second moving direction and first moving direction, respectively, along the first moving axis after the cleaning period has passed.

Taking an example, the brush unit moves from one end side to the other end side of the filter with respect to the width direction of the filter, i.e. the first moving direction, during the predetermined cleaning period. Thereby, the filter is firstly cleaned. After that, the brush unit returns to the original position by moving in the second moving direction. Preferably, the brush secondly cleans while it moves back to the original position. Thereby, the filter can be cleaned twice.

According to further another preferred reference example of any one of the filter cleaning device configured to move the brush unit and the filter in the first moving direction and the second moving direction, mentioned above, the controller is configured to control the driving unit such that the brush rotates in the second rotation direction while the brush unit and the filter move in the second moving direction and first moving direction, respectively.

With the configuration above, the brush contacts with the filter surface with different angles in the first and second cleanings. Thereby, the filter can be effectively cleaned twice.

According to further another preferred reference example of any one of the filter cleaning device mentioned above, the driving unit has a single motor, and the single motor is configured to move the brush unit with respect to the filter, and rotate the brush.

Since the same motor is used to move and rotate the brush, the cost for manufacturing the filter cleaning device can be reduced.

According to further another preferred reference example of any one of the filter cleaning device with the motor mentioned above, the driving unit is configured to rotate the brush in the first rotation direction while moving the brush unit in a first moving direction along the first moving axis, and rotate the brush in the second rotation direction while moving the brush unit in the second moving direction along the first moving axis.

Such a driving unit preferably includes the motor, gears coupling to an output shaft of the motor, a pair of guide rails engaging with the gears and extending along the filter surface to guide the brush unit. Such a configuration generally enables downsizing of the filter cleaning device in an easier manner comparing to moving the filter with respect to the brush unit.

A reference example of an air-conditioner has the filter cleaning device mentioned above.

### Brief Description of the Drawings

Fig. 1 is a schematic view indicating an installation state of an inner air-conditioning unit according to an embodiment of the present invention.
Fig. 2 is a top perspective view of the inner air-conditioning unit according to the present embodiment.
Fig. 3 is a front view of a filter cleaning device according to the present embodiment.
Fig. 4 is a side view of the filter cleaning device according to the present embodiment.
Fig. 5 is a partial top perspective view of the filter cleaning device according to the present embodiment.
Fig. 6 is a top perspective view of a cleaning unit according to the present embodiment.
Fig. 7 is a top perspective view of a brush unit according to the present embodiment.
Fig. 8 is a top perspective view of a cylinder unit according to the present embodiment.
Fig. 9 is a partial horizontal cross-sectional view of the filter cleaning device according to the present embodiment.
Fig. 10 is an enlarged cross-sectional view of the filter cleaning device according to the present embodiment.
Fig. 11 is a first schematic cross-sectional view of the vicinity of a brush according to the present embodiment, indicating the state of transfer of particles.
Fig. 12 is a second schematic cross-sectional view of the vicinity of the brush according to the present embodiment, indicating the state of transfer of particles.
Fig. 13 is a third schematic cross-sectional view of the vicinity of the brush according to the present embodiment, indicating the state of transfer of particles.
Fig. 14 is a schematic top view of the filter cleaning device according to the present embodiment, indicating a movement of the cleaning unit.
Fig. 15 is a schematic side view of the filter cleaning device according to the present embodiment, indicating the movement of the cleaning unit.
Fig. 16 is a partial vertical cross-sectional view of the filter cleaning device according to the present embodiment, indicating transfer of particles
Fig. 17 is a block diagram indicating a functional configuration of an air conditioner according to the present embodiment.
Fig. 18 is a flow chart indicating a process performed by a filter cleaning controller according to the present embodiment.
Fig. 19 is a flow chart indicating a cleaning operation according to the present embodiment.
Fig. 20 is a flow chart indicating a brush cleaning operation according to the present embodiment.

### Detailed Description of Preferred Embodiments

An air-conditioner including a filter cleaning device according to a preferred embodiment of the present invention will be described with reference to the drawings.

### Overview of Configuration of Air Conditioner

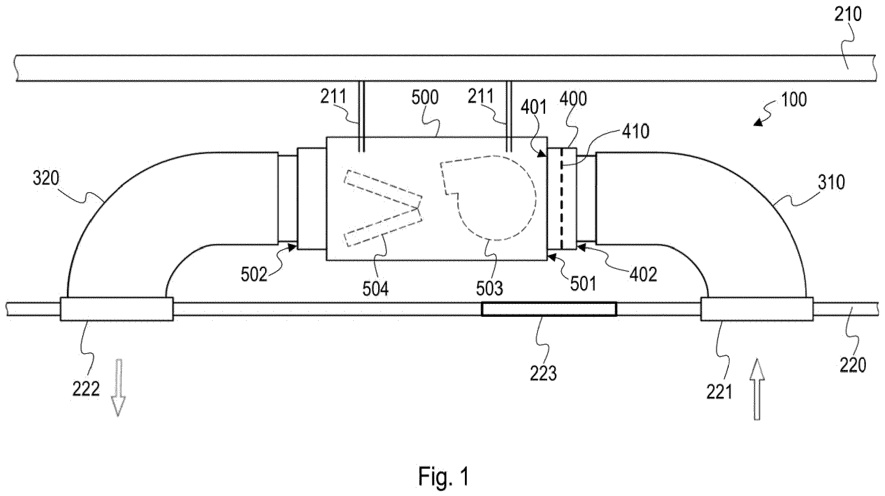

Fig. 1 is a schematic view indicating an installation state of the air conditioner. The air conditioner is included in an inner air-conditioning unit of an air-conditioning system.

The inner air-conditioning unit 100 is arranged between a building slab 210 and a false ceiling 220. The inner air-conditioning unit 100 comprises an air inlet duct 310, a filter cleaning device 400, an air-conditioner body 500 and an air outlet duct 320.

The air-conditioner body 500 has an air inlet port 501 and an air outlet port 502 which are formed on opposite outer sides of the air-conditioner body 500, respectively. The air-conditioner body 500 is hung from the building slab 210 behind the false ceiling 220 by hanging members 211. The air-conditioner body 500 is fixed in a state where two opposite sides thereof are parallel to a horizontal plane and the rest four sides thereof are perpendicular to the horizontal plane. The air inlet port 501 and the air outlet port 502 are positioned on the laterally opposite sides.

The air-conditioner body 500 has a fan 503 and a heat exchanger 504 inside. The fan 503 is configured to induce an internal airflow going from the air inlet port 501 to the air outlet port 502 through the heat exchanger 504. The heat exchanger 504 is configured to heat and/or cool the air passing through the heat exchanger 504. Thus, a main air-flow in the filter cleaning device 400 goes from the air inlet port 501 to the air outlet port 502.

The air-conditioner body 500 is attached with the filter cleaning device 400 at the air inlet port 501 by means of a flange coupling or the like (not shown). The filter cleaning device 400 has a rectangular tubular shape with short length. The filter cleaning device 400 has a body side port 401 and a duct side port 402 which are formed on opposite ends of the rectangular tubular shape. The filter cleaning device 400 has a filter (a flat filter) 410 positioned at between the body side port 401 and the duct side port 402. The filter 410 is configured to allow the air to pass through from the body side port 401 to the duct side port 402 while filtrating the air. The body side port 401 is connected to the air inlet port 501 of the air-conditioner body 500. Thus, a main air-flow in the air-conditioner body 500 goes from the duct side port 402 to the body side port 401.

The filter cleaning device 400 and the air-conditioner body 500 may be produced as a unit, or assembled to be put together after individually manufactured. The filter cleaning device 400 and the air-conditioner body 500 may be taken as an "air-conditioner."

The air inlet duct 310 connects an inlet grating 221 formed in the false ceiling 220 and the duct side port 402 of the filter cleaning device 400. Hence, the air inlet port 501 of the air-conditioner body 500 leads to, via the filter cleaning device 400, the air inlet duct 310 and the inlet grating 221, a space to which the inlet grating 221 is exposed. In addition, the air outlet duct 320 connects the air outlet port 502 of the air-conditioner body 500 and an outlet grating 222 formed in the false ceiling 220. Hence, the air outlet port 502 of the air-conditioner body 500 leads to, via the air outlet duct 320 and the outlet grating 222, a space to which the outlet grating 222 is exposed.

The fan 503 has a capacity high enough to make a continuous air flow from the inlet grating 221 to the outlet grating 222. Thus, the inner air-conditioning unit 100 can supply a heated/cooled air, i.e. perform air-conditioning. Moreover, the air passes the filter 410 in the filter cleaning device 400. Thus, the inner air-conditioning unit 100 is capable of not only suppling a clean air to the space to be air-conditioned but also avoiding the parts of the air-conditioner body 500, particularly the heat exchanger 504, from being soiled and clogged.

The inner air-conditioning unit 100 is concealed behind the false ceiling 220. Therefore, an inspection door 223 is provided on the false ceiling 220 for a purpose of maintenance of the inner air-conditioning unit 100.

In this embodiment, the terms related to directions are to be interpreted as follows, unless otherwise specified. The terms indicating linear directions pertinent to the inner air-conditioning unit 100 are the linear directions in a case where the inner air-conditioning unit 100 is in use. The term "width" is the length in a direction which is horizontal and perpendicular to the main air-flow direction in the filter cleaning device 400. The term "height" is the length in a direction which is vertical and perpendicular to the main air-flow direction in the filter cleaning device 400. The term "depth" is the length in a direction which is horizontal and parallel to the main air-flow direction in the filter cleaning device 400. The terms "left" and "right" are the left and the right in a horizontal direction when viewed from the upstream side of the main air-flow in the filter cleaning device 400. The term "side" is the side in a horizontal direction with respect to the main air-flow direction in the filter cleaning device 400. The terms indicating rotation directions are the rotation directions when viewed from the above in a case where the inner air-conditioning unit 100 is in use. The configurations explained in this embodiment may be horizontally flipped in the width direction. Therefore, the terms "left" and "right" and the terms "clockwise" and "counterclockwise" in this embodiment may be respectively interchanged.

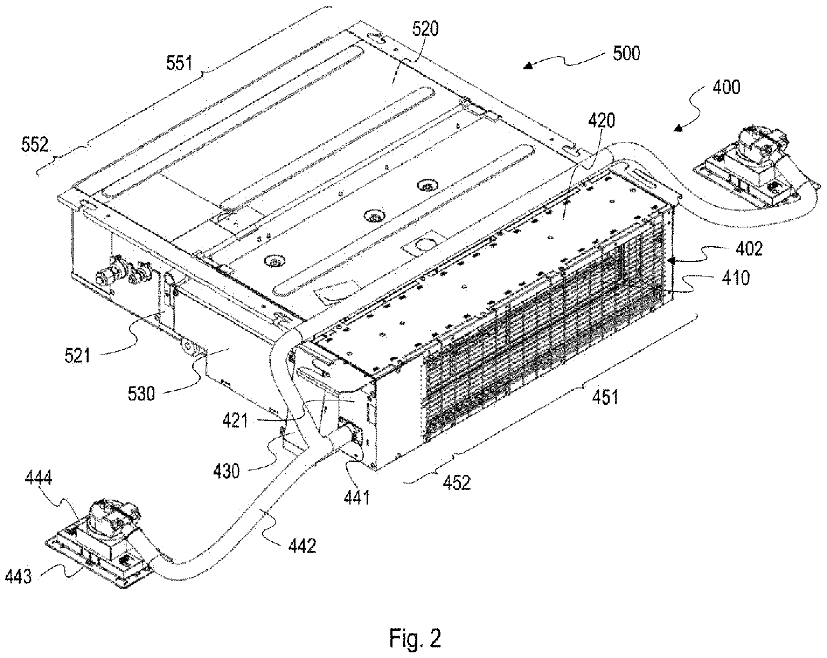

Fig. 2 is a top perspective view of the air conditioner comprising the filter cleaning device 400 and the air-conditioner body 500.

The air-conditioner body 500 comprises an air-conditioner housing 520 having a substantially cuboid shape. The height of the air-conditioner housing 520 is smaller than either the width and the depth of the air-conditioner housing 520. In other words, the air-conditioner body 500 is configured so as to ensure an internal space large enough to accommodate necessary elements by a horizontally wide and vertically narrow shape. The air-conditioner body 500 is also configured so as to ensure opening spaces of the air inlet port 501 and the air outlet port 502 large enough to intake and outlet the air with small friction loss by the horizontally wide and vertically narrow shape. Since the height is suppressed, the air-conditioner body 500 is applicable to the in-ceiling space having a limitation in height.

The air-conditioner body 500 comprises a body-side control box 530 mounted on an outer surface of a body side wall 521 which is one of the side walls of the air-conditioner housing 520. In this embodiment, the body side wall 521 is the left side wall of the air-conditioner housing 520.

The body-side control box 530 includes an arithmetic circuit such as a CPU (Central Processing Unit), a work memory used by the CPU, such as a RAM (Random Access Memory), and a recording medium storing control programs and information used by the CPU, such as a ROM (Read Only Memory), although they are not shown. The body-side control box 530 is configured to receive an electric power supply from an external power source. The body-side control box 530 is connected to each of the electronic elements mounted on the air-conditioner body 500 via power-supply cables and/or control cables (not shown). Thus, the body-side control box 530 is configured to perform information processing and signal processing to control the operation of the air-conditioner body 500 by the CPU executing the control programs, so as to achieve the functions of the filter cleaning device 400.

In the vicinity area of the body-side control box 530, including the interior space of air-conditioner housing 520, a lot of cables are arranged. Therefore, the air inlet port 501 (see Fig. 1), the air channel (not shown) in the air-conditioner body 500, and the air outlet port 502 (see Fig. 1) are formed closer to another side wall (not shown) than the body side wall 521. The other side wall is one of the walls of the air-conditioner housing 520, which is opposite to the body side wall 521. Thus, the air-conditioner body 500 has a chamber area 551 and a wiring area 552. The chamber area 551 is a width range which lets through the air for air-conditioning. The wiring area 552 is a width range which does not let through the air for air-conditioning.

The filter cleaning device 400 comprises a device housing 420 having a substantially cuboid shape. The height and width of the device housing 420 are substantially the same as the height and width of the air-conditioner housing 520 of the air-conditioner body 500. By this, the filter cleaning device 400 is also applicable to the in-ceiling space having a limitation in height.

The duct side port 402, the filter 410 and the body side port 401 (see Fig. 1) have substantially the same width range as the width range of the air inlet port 501 of the air-conditioner body 500, i.e. the chamber area 551 of the air-conditioner body 500. Thus, the filter cleaning device 400 has a filtering area 451 and a non-filtering area 452. The filtering area 451 is a width range which lets through the air for air-conditioning. The non-filtering area 452 is a width range which does not let through the air for air-conditioning
The filter cleaning device 400 comprises a device-side control box 430 mounted on an outer surface of a device side wall 421. The device side wall 421 is one of the side walls of the device housing 420, which is on the same side as the body-side control box 530 of the air-conditioner body 500 in the width direction.

The device-side control box 430 includes an arithmetic circuit such as a CPU, a work memory used by the CPU, such as a RAM, and a recording medium storing control programs and information used by the CPU, such as a ROM, although they are not shown. The device-side control box 430 is configured to receive an electric power supply from an external power source or the body-side control box 530 of the air-conditioner body 500. The device-side control box 430 is connected to each of the electronic elements mounted on the filter cleaning device 400 via power-supply cables and/or control cables (not shown). Thus, the device-side control box 430 is configured to perform information processing and signal processing to control the operation of the filter cleaning device 400 by the CPU executing the control programs, so as to achieve the functions of the filter cleaning device 400.

The filter 410 of the filter cleaning device 400 is configured to filter out the particles from the air for air-conditioning. The filtered-out particles adhere to the filter 410 on the upstream side. The amount of the adhering particles increases as an air-conditioning operation, which is an operation for air-conditioning, is performed longer. This causes an increase in a friction loss of the air flow, resulting in a deterioration of the air-conditioning performance of the inner air-conditioning unit 100.

For avoiding such a performance deterioration, the filter cleaning device 400 has a filter cleaning function. The filter cleaning device 400 comprises a cleaning unit (not shown) which is configured to remove the particles adhering to the filter 410 and to accumulate the removed particles inside. The cleaning unit is controlled to move along the width direction (a first moving axis which extends substantially horizontally and along the filter surface) and park at a predetermined parking position within the above-mentioned non-filtering area (hereinafter referred to as "the parking area") 452. The configuration of the cleaning unit will be detailed later.

The amount of the accumulated particles increases as the air-conditioning operation is performed longer while performing a cleaning operation at intervals. The cleaning operation is an operation for cleaning the filter 410 by the cleaning unit. To avoid the amount of the accumulated particles exceeds the accumulation capacity of the cleaning unit, the filter cleaning device 400 has a particle-evacuation function. The filter cleaning device 400 comprises an exhaust opening (a second hole) 441, a hose 442 and a suction socket 443.

The exhaust opening 441 is an opening formed on the device side wall 421, having a cylindrical element projecting inwardly and outwardly from the device side wall 421. The exhaust opening 441 is configured to lead to the internal space of the cleaning unit when the cleaning unit is at the parking position. The hose 442 is connected to the cylindrical element of the exhaust opening 441. The suction socket 443 has a front-side part (not shown) and a back-side part 444. The front-side part is arranged on the surface of the false ceiling 220 so as to be exposed. The hose 442 is connected to the back-side part 444 facing the in-ceiling space. The front-side part is formed with an aperture (not shown) which is configured to lead to the hose 442 through the back-side part 444.

Thus, the aperture of the suction socket 443 leads to the internal space of the cleaning unit via the hose 442 and the exhaust opening 441. With this configuration, the particles accumulated in the cleaning unit can be easily removed by the operator using a vacuum cleaner attached to the suction socket 443 to suck out the particles.

As shown in Fig. 2, two or more sets of the hose 442 and the suction socket 443 may be connected to the exhaust opening 441. The suction socket 443 may be arranged on a false wall, a false floor or the like (not shown).

### Configuration of Filter Cleaning Device

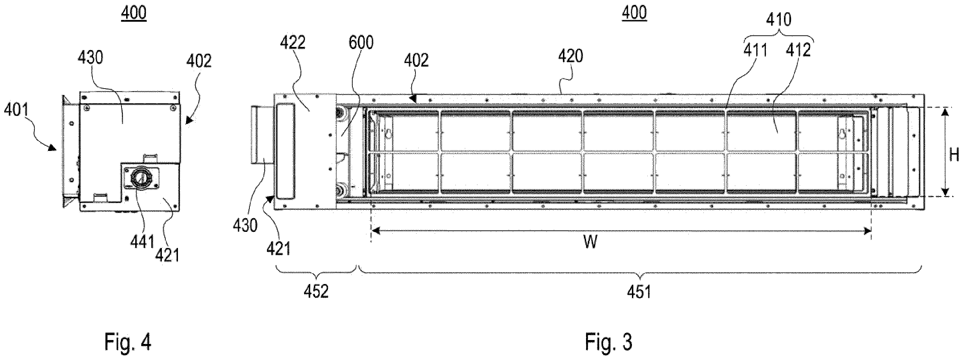

Fig. 3 is a front view of the filter cleaning device 400. Here, Fig. 3 shows the state where the cleaning unit is parking at the parking position. Fig. 4 is a side view of the filter cleaning device 400 shown in Fig. 3.

The filter 410 comprises a filter frame 411 and a mesh sheet (a filter surface) 412. The filter frame 411 extends over the filtering area 451 in parallel to both the width direction and the height direction. The filter frame 411 has a plurality of vertical ribs and a plurality of horizontal ribs. The mesh sheet 412 is fixed to the entirety of the filter frame 411. Thus, the filter 410 has a longitudinal and flat shape perpendicular to the main air-flow direction, having a width W and a height H. In this embodiment, the height H is smaller than the width W. The filter frame 411 and the mesh sheet 412 are, for example, made of plastic material. The mesh sheet 412 is fixed to the filter frame 411 by means of moulding or the like.

The body side port 401 (see Fig. 1), the filter 410, the duct side port 402 and the air inlet duct 310 (see Fig. 1) are formed in approximately the same size and the same position when seen from the main air-flow direction. This means that the duct side port 402 is narrower than the device housing 420 in the width direction. Thus, the device housing 420 has a cover wall 422 which covers the rest part of the upstream side of the device housing 420.

The width of the cleaning unit 600 is narrower than the width of the parking area 452. Therefore, the cleaning unit 600 does not interfere the air flow in the filtering area 451 at least when the cleaning unit 600 is at the parking position in the parking area 452.

Moreover, the parking area 452 is arranged in an area corresponding to the wiring area 552 of the air-conditioner body 500 in the width direction. The device-side control box 430 is also arranged in an area corresponding to the body-side control box 530 of the air-conditioner body 500 (see Fig. 2) in the width direction. Therefore, it is not necessary to increase the width and/or the height of the air-conditioner (the filter cleaning device 400 and the air-conditioning body 500) for the filter cleaning function.

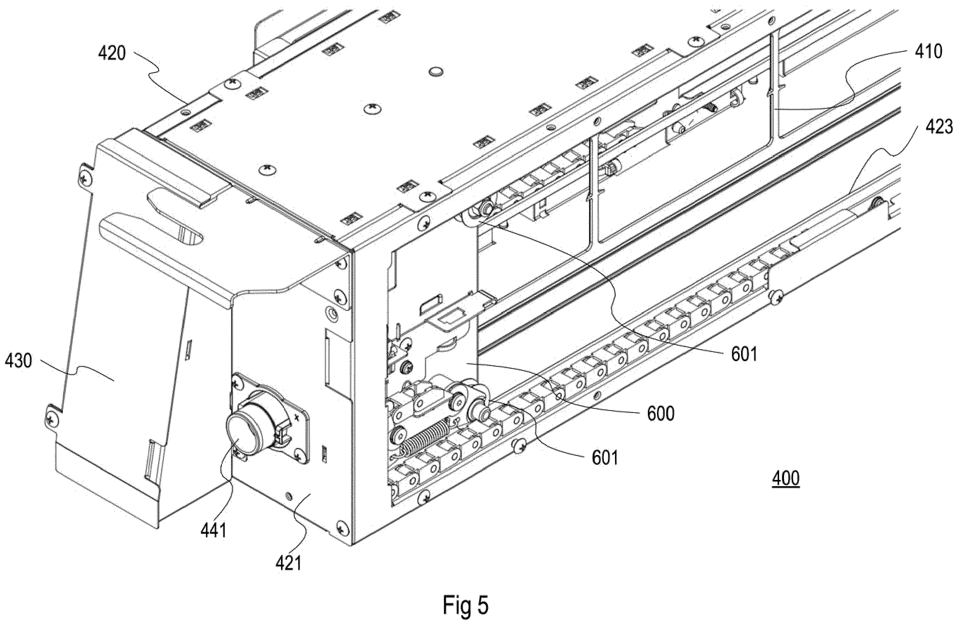

Fig. 5 is a partial top perspective view of the filter cleaning device 400, with some parts (in particular, the cover wall 422) omitted.

The filter cleaning device 400 comprises a plurality of guide rails 423 and a plurality of racks (not shown). Both the guide rails 423 and the racks are arranged in the device housing 420 on both sides of the filter 410 in parallel with the filter 410, extending in the width direction over the width range of the device housing 420. The guide rails 423 are arranged at four corners of the device housing 420 and projecting vertically towards the vertical centre of the device housing 420, respectively. The racks are arranged close to the upper guide rails 423 and projecting horizontally towards the horizontal centre of the device housing 420, respectively.

The cleaning unit 600 is configured to engage with the guide rails 423 and the racks so as to slide in the width direction by utilizing the guide rails 423 and the racks. The cleaning unit 600 comprises a plurality of wheels 601 and a plurality of pinion gears (not shown).

The wheels 601 are freely rotatably fixed to the outer surface of the cleaning unit 600. The wheels 601 are configured to mesh with the guide rails 423 such that the attitude and the movement of the cleaning unit 600 are stabilized in a linear traveling along the filter 410. The pinion gears are rotatably fixed to the outer surface of the cleaning unit 600. The pinion gears are configured to mesh with the racks and be rotated by motors (not shown) such that the cleaning unit 600 moves along the filter 410. The motors are controlled by the device-side control box 430 such that the cleaning unit 600 travels in the width direction along the filter 410 under control. The cleaning unit 600 is preferably configured to exert a pressure on each of the wheels 601 towards the corresponding guide rail 423 by means of springs or the like so as to ensure engagements between the wheels 601 and the guide rails 423.

### Configuration of Cleaning Unit

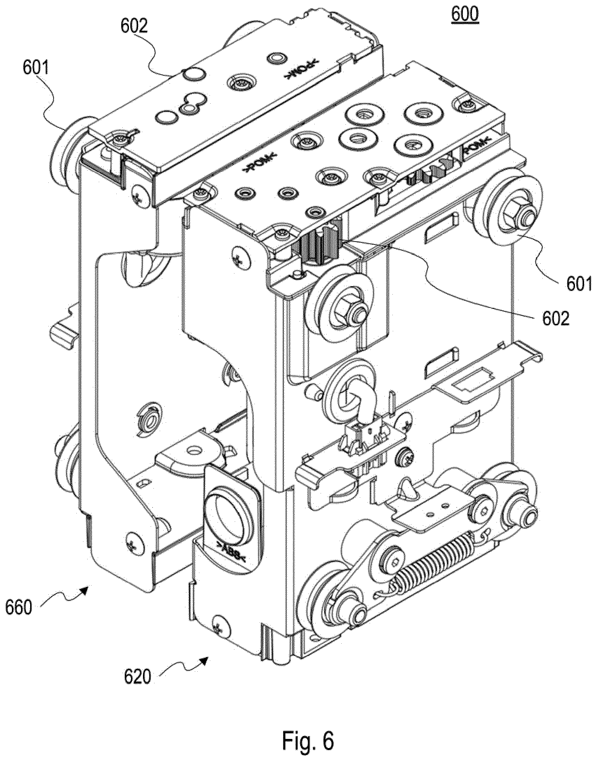

Fig. 6 is a top perspective view of the cleaning unit 600.

The cleaning unit 600 comprises a brush unit 620 and a cylinder unit 660. The brush unit 620 and the cylinder unit 660 are respectively arranged on opposite sides of the filter 410 with a predetermined distance. In other words, the brush unit 620 and the cylinder unit 660 are configured to sandwich the filter 410 therebetween. The wheels 601 and the pinion gears 602 mentioned above are provided to each of the brush unit 620 and the cylinder unit 660.

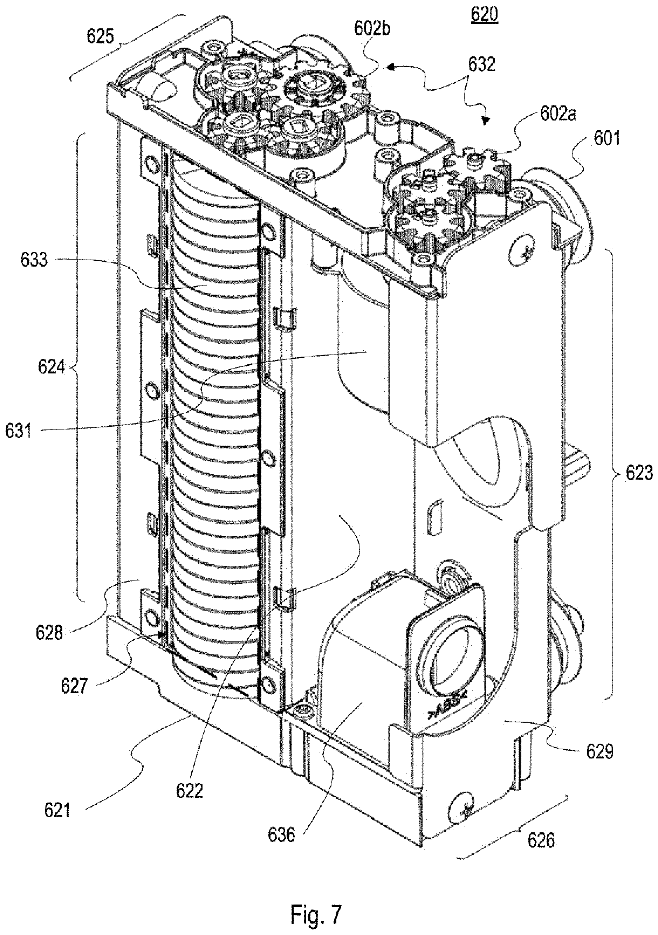

Fig. 7 is a top perspective view of the brush unit 620 as viewed from the cylinder unit 660 side.

The brush unit 620 comprises a brush-side casing 621 and a plurality of inner walls 622. The inner space of the brush-side casing 621 is sectioned by the inner walls 622 into four spaces of a machine space 623, a brush space 624, a gear space 625 and a storage space 626.

The machine space 623 and the brush space 624 extend vertically and are adjoiningly arranged in the width direction. The machine space 623 is positioned closer to the device side wall 421 of the device housing 420 (see Fig. 5) than the brush space 624. The gear space 625 extends horizontally over the machine space 623 and the brush space 624. The storage space 626 extends horizontally under the machine space 623 and the brush space 624.

The depths of the spaces 623-626 are substantially the same. The widths of the gear space 625 and the storage space 626 are substantially the same as the width of the machine space 623 and the brush space 624 as a unit. The height of the brush space 624 is substantially the same as the height of the filter 410 (i.e. the height H, see Fig. 3). The brush space 624 and the storage space 626 are basically closed spaces. Meanwhile, the brush space 624 is open to the storage space 626 at the bottom side of the brush space 624. The brush space 624 is also open to the outside of the brush-side casing 621 through a brush-side opening 627 formed in a brush-side wall 628. The brush-side wall 628 is one of the side walls of the brush-side casing 621, which faces the cylinder unit 660.

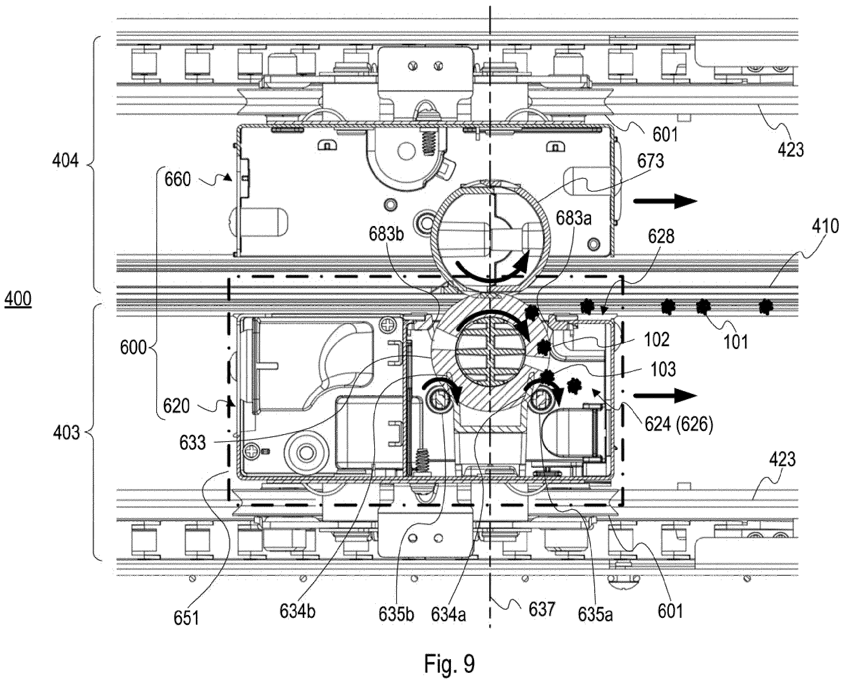

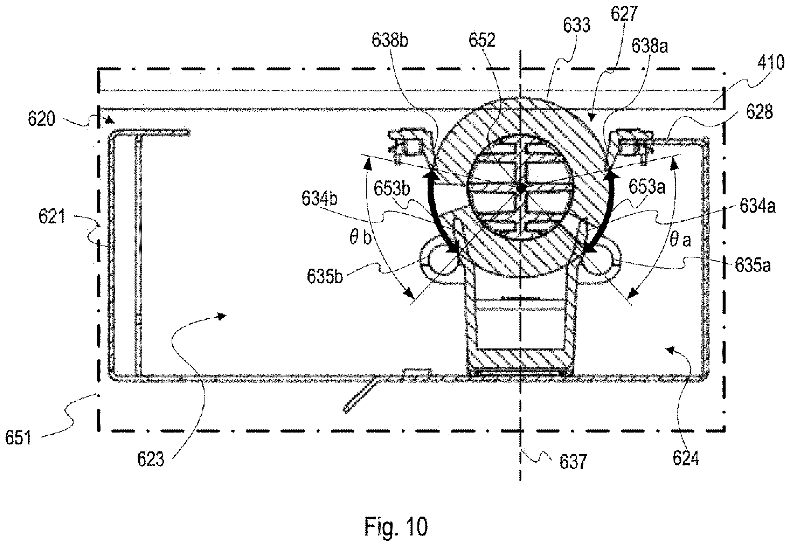

The brush unit 620 comprises a first motor 631, a gear mechanism 632, a brush 633, two combs (comb-like members, main combs), two sub combs (comb-like members), two separation rollers and an exhaust port 636 (see the combs 634, the sub combs 638 and the separation rollers 635 in Figs. 9 and 10).

The first motor 631 is a stepping motor arranged in the machine space 623. The first motor 631 is configured to be controlled by the device-side control box 430 (see Fig. 5) to switch between a forward rotation mode and an inverse rotation mode. The first motor 631 is also configured to be controlled by the device-side control box 430 to output a rotational force at a predetermined rotation speed and torque in a given rotation mode to the gear mechanism 632.

The gear mechanism 632 is arranged mainly in the gear space 625. The gear mechanism 632 comprises a plurality of gears including the pinion gears 602 mentioned above and a plurality of shafts. The gear mechanism 632 includes the first pinion gear 602a and the second pinion gear 602b which mesh with the same rack. The gear mechanism 632 is configured to transfer the rotational force outputted from the first motor 631 to the first pinion gear 602a so as to move the brush unit 620 with respect to the rack. This movement of the brush unit 620 generates a rotational force of the second pinion gear 602b. The gear mechanism 632 is also configured to transfer the rotational force of the second pinion gear 602b to the brush 633 and the separation rollers. Thus, the gear mechanism 632 is configured to transfer the rotational force from the first motor 631 to the first pinion gear 602a, the brush 633 and the separation rollers with appropriate rotation directions, rotation speeds and torques according to the rotation of the first motor 631.

The brush 633 is a roll brush mainly arranged in the brush space 624. The axis of the brush 633 vertically extends from the gear space 625 to the storage space 626. The brush 633 is rotatably supported about the axis (a rotation axis) at the gear space 625 and the storage space 626. The axis of the brush 633 is connected to the gear mechanism 632 in the gear space 625. The brush 633 comprises bristles uniformly arranged around the axis. The bristles are formed over the height range of the brush space 624. In other words, the brush 633 extends from one end side to the other end side of the filter 410 in the height direction, and the height range of the part where the bristles is formed on the brush 633 substantially corresponds to the height range of the mesh sheet 412 of the filter 410.

The brush 633 is configured and positioned such that the bristles which are located at a predetermined angle range with respect to the axis of the brush 633 protrude from the brush-side opening 627 formed in the brush-side wall 628 when no resisting force is exerted to the bristles. The brush-side opening 627 has a long rectangular shape. Thus, the brush 633 is configured to rotate the bristles while exposing the bristles from the brush-side opening 627 under the control of the body-side control box 530.

The brush-side opening 627 may have a slightly wider width than the area from which the bristles protrude. Thus, the brush unit 620 has clearance gaps between the brush 633 and the brush-side wall 628 at least on each side of the protruding part of the brush 633 in the brush-side opening 627. The clearance gap allows the particles adhered to the protruding part of the bristles to be smoothly introduced into the brush space 624 along with the rotation of the brush 633.

The combs and the sub combs are arranged in the brush space 624. The combs and the sub combs are respectively fixed in parallel to the axis of the brush 633 and in contact with the bristles of the brush 633. The combs and the sub combs are configured to comb the bristles of the brush 633 when the brush 633 rotates. The configurations of the combs and the sub combs will be detailed later.

The separation rollers are arranged in the brush space 624 in parallel to the combs and in contact with teeth of the combs, respectively. The axis of each of the separation rollers is rotatably supported at the gear space 625 and the storage space 626. Each of the separation rollers is connected to the gear mechanism 632 in the gear space 625. The separation roller is configured to loosen the particles clotting on the combs. The configurations of the separation rollers will be detailed later.

The exhaust port 636 is arranged in the machine space 623 at the bottom side of the machine space 623. The exhaust port 636 has a shape of a bend tube. One end of the exhaust port 636 leads to the storage space 626 from the above. Another end of the exhaust port 636 is positioned higher than the storage space 626 and leads to the outside of the brush-side casing 621 at a controller-side wall 629. The controller-side wall 629 is one of the side walls of the brush-side casing 621 which faces the device side wall 421 (see Fig. 5) of the device housing 420. Thus, the exhaust port 636 is configured to allow the storage space 626 to communicate with the outside of the brush-side casing 621 at the controller-side wall 629.

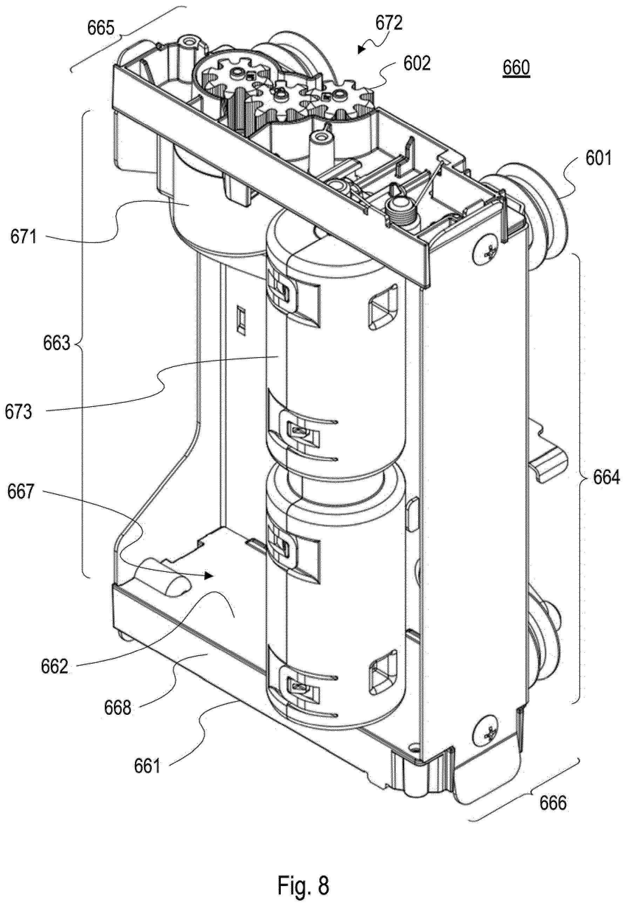

Fig. 8 is a top perspective view of the cylinder unit 660 as viewed from the brush unit 620 side.

The cylinder unit 660 comprises a cylinder-side casing 661. The inner space of the cylinder-side casing 661 includes four spaces of a cylinder-side machine space 663, a cylinder space 664, a cylinder-side gear space 665 and a lower space 666.

In a plane parallel to the filter 410, the positions of the cylinder-side machine space 663, the cylinder space 664, the cylinder-side gear space 665 and the lower space 666 correspond to the positions of the machine space 623, the brush space 624, the gear space 625 and the storage space 626 of the brush unit 620, respectively in this order. The cylinder-side machine space 663 and the cylinder space 664 are open to the outside of the cylinder-side casing 661 through a cylinder-side opening 667 formed on a brush-facing side 668. The brush-facing side 668 is one of the sides of the cylinder-side casing 661, which faces the brush unit 620. The cylinder unit 660 may also comprises one or more of inner walls 662 which section the inner space of the cylinder-side casing 661.

The cylinder unit 660 comprises a second motor 671, a cylinder-side gear mechanism 672 and a cylinder 673.

The second motor 671 is a stepping motor arranged in the cylinder-side machine space 663. The second motor 671 is configured to be controlled by the device-side control box 430 (see Fig. 5) to switch between a forward rotation mode and an inverse rotation mode. The second motor 671 is also configured to output a rotational force at a predetermined rotation speed and torque in a given rotation mode to the cylinder-side gear mechanism 672.

The cylinder-side gear mechanism 672 is arranged mainly in the cylinder-side gear space 665. The cylinder-side gear mechanism 672 comprises a plurality of gears including the pinion gear 602 mentioned above and a plurality of shafts. The cylinder-side gear mechanism 672 is configured to transfer the rotational force outputted from the second motor 671 to the pinion gear 602 with appropriate rotation directions, rotation speeds and torques according to the rotation of the second motor 671, so as to move the cylinder unit 660 with respect to the rack.

The cylinder 673 is a cylindrical member arranged in the cylinder space 664. The axis of the cylinder 673 vertically extends from the cylinder-side gear space 665 to the lower space 666. The axis of the cylinder 673 is freely rotatably supported at the cylinder-side gear space 665 and at the lower space 666. The cylinder 673 comprises a tubular element with constrictions arranged at positions corresponding to the positions of the horizontal ribs of the filter frame 411 (see Fig. 3). The height range of the tubular element is substantially the same as the height range of the part where the bristles are formed on the brush 633.

The cylinder unit 660 is configured such that the brush-side casing 621 and the cylinder-side casing 661 are at substantially the same position in the width direction when the relative position between the brush unit 620 and the cylinder unit 660 is at a predetermined relative position (hereinafter referred to as "the ideal relative position"). The ideal relative position is, for instance, a relative position in which the positional gap in the width direction between the axis of the brush 633 and the axis of the cylinder 673 is within a predetermined range.

The cylinder 673 is configured and positioned such that the part of the tubular element which is located at a predetermined angle range with respect to the axis of the cylinder 673 protrude from the cylinder-side opening 667 when no resisting force is exerted to the tubular element.

Thus, the cylinder 673 is configured to freely rotate the tubular element while exposing the tubular element from the cylinder-side opening 667. The cylinder unit 660 is preferably configured to exert pressure on the cylinder 673 in a direction towards the brush 633 of the brush unit 620 when the brush unit 620 and the cylinder unit 660 are in the ideal relative position. By this pressure exerted on the cylinder 673, the contact between the brush 633 and the cylinder 673 through the filter 410 is ensured.

Fig. 9 is a partial horizontal cross-sectional view of the filter cleaning device 400 when the filter cleaning device 400 is in use. More specifically, Fig. 9 shows a state of the vicinity part of the cleaning unit 600 when cross-sectioned at a central part of the cleaning unit 600 and viewed from the above.

The inner space of the device housing 420 of the filter cleaning device 400 is divided by the filter 410 into an upstream side space 403 and a downstream side space 404. The brush unit 620 is arranged in the upstream side space 403, and the cylinder unit 660 is arranged in the downstream side space 404. The filter cleaning device 400 is configured to move the cleaning unit 600 in the width direction, while keeping the cleaning unit 600 in a second predetermined relative position with respect to the filter 410 in the height direction and in a predetermined clearance with respect to the filter 410 in the depth direction.

The second predetermined relative position is a relative position by which the height ranges of the brush 633 and the cylinder 673 substantially coincide with the height range of the filter 410. The predetermined clearance is a clearance by which the protruding part of the brush 633 engages with the mesh sheet 412 (see Fig. 3) of the filter 410 at a predetermined depth. The predetermined clearance is also a clearance by which the protruding part of the cylinder 673 contacts with mesh sheet 412 with a predetermined pressure when the brush 633 engages with the mesh sheet 412. The predetermined pressure is a pressure which balances with the pressure exerted to the filter 410 from the opposite side by the engaging brush 633.

Fig. 10 is an enlarged cross-sectional view of the filter cleaning device 400 with some parts omitted. More specifically, Fig. 10 shows the vicinity part of the brush space 624 (the area surrounded by a line 651 in Fig. 9) when cross-sectioned at a central part of the cleaning unit 600 and viewed from the above. The configuration of the brush unit 620 in brush space 624 is more detailed referring to both Figs. 9 and 10.

The combs 634 include the first comb 634a for a forward rotation of the brush 633 and the second comb 634b for an inverse rotation of the brush 633. In this embodiment, the forward rotation is the clockwise rotation, and the inverse rotation is the counterclockwise rotation. The first comb 634a and the second comb 634b are configured and positioned so as to be substantially symmetrical with respect to a plane 637 which is parallel to the depth direction and passes through the axis 652 of the brush 633. The first comb 634a and the second comb 634b are positioned opposite to the brush-side wall 628 with respect to the axis 652 of the brush 633.

More specifically, in the surface of revolution of the brush 633 within the brush space 624, the first comb 634a is disposed on the upstream side with respect to the second comb 634b in the forward rotation direction (a first rotation direction) of the brush 633. In other words, in the surface of revolution of the brush 633 within the brush space 624, the second comb 634b is disposed on the upstream side with respect to the first comb 634a in the inverse rotation direction (a second rotation direction) of the brush 633.

Each of the first comb 634a and the second comb 634b comprises a comb body extending in the height direction and a plurality of teeth aligned on the comb body. The teeth are uniformly arranged over the height range of the part where the bristles are formed on the brush 633. The teeth protrude towards the bristles of the brush 633. The teeth are configured to engage with the bristles at a predetermined depth and a predetermined angle with respect to the axis 652 of the brush 633.

The first comb 634a is configured such that the teeth of the first comb 634a are inclined towards the upstream side of the forward rotation direction of the brush 633. Meanwhile, the second comb 634b is configured such that the teeth of the second comb 634b are inclined towards the upstream side of the inverse rotation direction of the brush 633.

Thus, the first comb 634a is configured to comb the brush 633 when the brush 633 rotates in the forward rotation direction, meanwhile the second comb 634b is configured to comb the brush 633 when the brush 633 rotates in the inverse rotation direction.

The teeth of the first comb 634a and the teeth of the second comb 634b may be configured to reach to substantially the same depth in the bristles of the brush 633. The inclining angles of the teeth of the first comb 634a and the teeth of the second comb 634b relative to a direction towards the axis 652 of the brush 633 in the corresponding rotation direction also may be substantially the same.

The sub combs 638 include the first sub comb 638a for the inverse rotation of the brush 633 and the second sub comb 638b for the forward rotation of the brush 633. The first sub comb 638a and the second sub comb 638b are configured and positioned so as to be substantially symmetrical with respect to the plane 637. The sub combs 638 are also positioned closer to the brush-side wall 628 with respect to the axis 652 of the brush 633.

More specifically, in the surface of revolution of the brush 633 within the brush space 624, the first sub comb 638a is disposed on the upstream side with respect to the first comb 634a and the downstream side with respect to the brush-side opening 627 in the forward rotation direction of the brush 633. Similarly, in the surface of revolution of the brush 633 within the brush space 624, the second sub comb 638b is disposed on the upstream side with respect to the second comb 634b and the downstream side with respect to the brush-side opening 627 in the inverse rotation direction of the brush 633.

Each of the first sub comb 638a and the second sub comb 638b comprises a comb body extending in the height direction and a plurality of teeth aligned on the comb body. The teeth are uniformly arranged over the height range of the part where the teeth are formed on the first comb 634a and the second comb 634b. The teeth protrude towards the bristles of the brush 633. The teeth are configured to engage with the bristles at a predetermined depth and a predetermined angle with respect to the axis 652 of the brush 633.The first sub comb 638a and the second sub comb 638b are fixed to the brush-side wall 628 at the edges of the brush-side opening 627 such that the teeth of the first sub comb 638a and the second sub comb 638b cover the above-mentioned clearance gaps, respectively.

The first sub comb 638a is configured such that the teeth of the first sub comb 638a are inclined towards the upstream side of the inverse rotation direction of the brush 633. Meanwhile, the second sub comb 638b is configured such that the teeth of the second sub comb 638b are inclined towards the upstream side of the forward rotation direction of the brush 633.

Thus, the first sub comb 638a is configured to comb the brush 633 when the brush 633 rotates in the inverse rotation direction, meanwhile the second sub comb 638b is configured to comb the brush 633 when the brush 633 rotates in the forward rotation direction.

The teeth of the first sub comb 638a and the teeth of the second sub comb 638b may be configured to reach to substantially the same depth in the bristles of the brush 633. The inclining angles of the teeth of the first sub comb 638a and the teeth of the second sub comb 638b relative to a direction towards the axis 652 of the brush 633 in the corresponding rotation direction also may be substantially the same.

The first sub comb 638a and the second sub comb 638b may be configured such that the teeth of the sub combs 638 engage with the bristles of the brush 633 less deeply than the teeth of the combs 634. In other words, the combs 634 may be configured such the teeth of the combs 634 engage with the bristles of the brush 633 more deeply than the teeth of the sub combs 638.

In the surface of revolution of the brush 633, the first sub comb 638a is the nearest member, among the members engaging with the brush 633, with respect to the first comb 634a, in a direction towards which the teeth of the first comb 634a are oriented. Thus, the first area 653a in the surface of revolution of the brush 633 between the first comb 634a and the first sub comb 638a is positioned within the brush space 624. Therefore, the particles which have been once introduced into the first area (hereinafter referred to as "the first particle-trap area") 653a would just transfer back and forth between the first comb 634a and the first sub comb 638a according to the rotation of the brush 633 until falling in the brush space 624. The first angle θa of the first particle-trap area 653a with respect to the axis 652 of the brush 633 may be 60 degrees, for instance.

Likewise, in the surface of revolution of the brush 633, the second sub comb 638b is the nearest member with respect to the second comb 634b. Thus, the particles which have been once introduced into the second particle-trap area 653b in the surface of revolution of the brush 633 between the second comb 634b and the second sub comb 638b would just transfer back and forth within the second particle-trap area 653b according to the rotation of the brush 633 until falling in the brush space 624. The second angle θb of the second particle-trap area 653b with respect to the axis 652 of the brush 633 may be 60 degrees, as well.

The arrangement of the first comb 634a, the second comb 634b, the first sub comb 638a and the second sub comb 638b is not limited to the above configuration as long as the first particle-trap area 653a and the second particle-trap area 653b is positioned within the brush space 624. For example, the set of the first comb 634a and the first sub comb 638a and the set of the second comb 634b and the second sub comb 638b do not necessarily need to be substantially symmetrical with respect to the plane 637. Moreover, the first comb 634a and/or the second comb 634b may be positioned closer to the brush-side wall 628 with respect to the axis 652 of the brush 633.

The particles might remain on the bristles in the first particle-trap area 653a and/or the second particle-trap area 653b for long and clot on the teeth of the first comb 634a and/or the second comb 634b. Therefore, the first separation roller 635a for the first comb 634a and the second separation roller 635b for the second comb 634b are arranged so as to promote such particles to fall in the brush space 624.

Here, a line at which the outer perimeter of the brush 633 and the teeth of the first comb 634a intersect with each other is referred to as "the first outer-engaged line." A line at which the outer perimeter of the brush 633 and the teeth of the second comb 634b intersect with each other is referred to as "the second outer-engaged line."

Each of the first separation roller 635a and the second separation roller 635b has a diameter much smaller than the diameter of the brush 633. The first separation roller 635a is rotatably supported about a rotation axis at the gear space 625 and the storage space 626 so as to be in parallel to the first outer-engaged line near the first outer-engaged line, and configured to be in contact with both the teeth of the first comb 634a and the bristles of the brush 633 over the height range of the bristles. Likewise, the second separation roller 635b is rotatably arranged near the second outer-engaged line to be in contact with both the teeth of the second comb 634b and the bristles of the brush 633 over the height range of the bristles.

The first separation roller 635a has spiral threads in a form of a left-hand screw around the axis of the first separation roller 635a over the height range of the part where the bristles are formed on the brush 633. The second separation roller 635b has spiral threads in a form of a right-hand screw around the axis of the second separation roller 635b over the height range of the part where the bristles are formed on the brush 633. Both the first separation roller 635a and the second separation roller 635b are configured to be rotated in the same rotation direction as the brush 633 by the gear mechanism 632 (see Fig. 7).

Thus, the first separation roller 635a is configured to move, at the first outer-engaged line, the spiral threads towards a direction which is downward and opposite to the movement direction of the bristles when the first comb 634a is combing the brush 633. Likewise, the second separation roller 635b is configured to move, at the second outer-engaged line, the spiral threads towards a direction which is downward and opposite to the movement direction of the bristles when the second comb 634b is combing the brush 633.

Accordingly, the first separation roller 635a loosens the particles clotting on the first comb 634a when the brush 633 rotates in the forward rotation direction, and the second separation roller 635b loosens the particles clotting on the second comb 634b when the brush 633 rotates in the inverse rotation direction.

The gear mechanism 632 of the brush unit 620 is configured to rotate the brush 633 in a predetermined rotation direction. The predetermined rotation direction is a rotation direction by which the protruding part of the bristles moves against the relative movement of the filter 410 with respect to the brush unit 620. In other words, the gear mechanism 632 is configured to rotate the brush 633 in the forward rotation direction when moving the brush unit 620 forward (in a first moving direction), and rotate the brush 633 in the inverse rotation direction when moving the brush unit 620 backward (in a second moving direction).

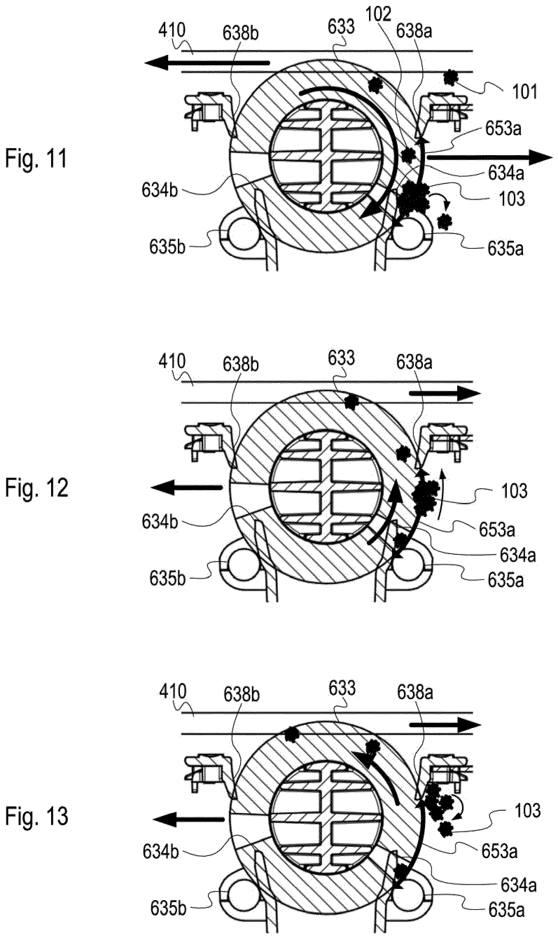

Figs. 11, 12 and 13 are schematic cross-sectional views of the vicinity of the brush 633, indicating the state of transfer of particles in this order.

As shown in Fig. 11, the particles 101 adhering to the filter 410 are introduced to the first particle-trap area 653a by the brush 633 rotating in the forward rotation direction while traveling forward. The teeth of the first sub comb 638a are inclined to the same direction as the rotation direction of the brush 633, and relatively short. Therefore, most of the particles 102 adhering to the brush 633 are introduced to the first particle-trap area 653a without being caught by the first sub comb 638a.

On the other hand, the teeth of the first comb 634a are inclined to the opposite direction to the forward rotation direction of the brush 633, and relatively long. Therefore, most of the particles 102 adhering to the brush 633 are caught by the first comb 634a. Some of the particles 103 caught by the first comb 634a would be accumulated at the teeth of the first comb 634a.

As shown in Fig. 12, some of the particles 103 remained on the first comb 634a transfer back towards the first sub comb 638a when the brush 633 rotates in the inverse rotation direction. Then, as shown Fig. 13, some of the particles 103 are caught by the first sub comb 638a to be removed from the brush 633. Thus, the particles accumulated at the first comb 634a can be removed just by the rotating the brush 633 in the inverse rotation direction. The similar function is also achieved by the second comb 634b and the second sub comb 638b.

The particles might adhere to the sub comb 638. Yet, such particles can be removed by the brush 633 rotating in the forward rotation direction next time.

By above-mentioned operation of the cleaning unit 600, the particles 101 adhering to the filter 410 is scraped by the bristles. The scraped particles 102 then adhere to the bristles and caught by one of the first comb 634a and the second comb 634b, which has the teeth opposed to the transfer direction of the scraped particles 102, as mentioned above.

While some of the caught particles 103 would immediately fall into the storage space 626 by gravity, the rest would remain on the bristles in the first particle-trap area 653a or the second particle-trap area 653b, or clot on the teeth of the first comb 634a or the second comb 634b. The remaining particles transfer back and forth within the first particle-trap area 653a or the second particle-trap area 653b, and are eventually removed by either the first comb 634a, the first sub comb 638a, the second comb 634b or the second sub comb 638b, to fall into the storage space 626 by gravity. The particles clotting on the first comb 634a or the second comb 634b are loosened with time by the movement of the threads of the first separation roller 635a or the second separation roller 635b to fall into the storage space 626 by gravity.

The cylinder unit 660 (see Fig. 9) is controlled to move in width direction synchronously with the brush unit 620 while pressing the protruding part of the cylinder 673 towards the protruding part of the rotating brush 633 through the filter 410. The diameter of the each bristle of the brush 633 is smaller than the diameter of the each mesh of the mesh sheet 412. Therefore, the ends of the bristles protrude from the mesh sheet 412 towards the cylinder unit 660. The cylinder unit 660 is passively rotated by the friction with the protruding ends of the bristles or the surface of the filter 410.

Even though the brush unit 620 exerts a pressure to the filter 410, the total pressure exerted to the filter 410 by the cleaning unit 600 is stabilized to nearly zero by the function of the cylinder unit 660. Therefore, it is prevented to damage the filter 410 even if the pressure exerted by the brush unit 620 is great and/or the filter 410 is undulating. This ensures a high cleaning efficiency of the filter cleaning device 400.

Moreover, since the cylinder unit 660 applies the tubular elements to the brushes of the brush unit 620 from the opposite side of the surface of the filter 410, it is prevented to scatter the particles from the part where the bristles engage with the filter 410.

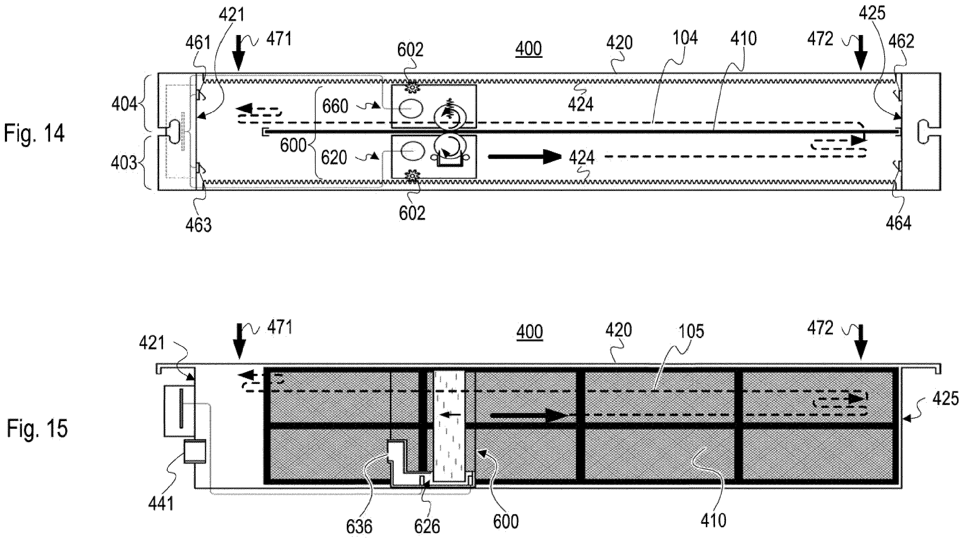

Fig. 14 is a schematic top view of the filter cleaning device 400, indicating the movement of the cleaning unit. Fig. 15 is a schematic side view of the filter cleaning device 400, indicating the movement of the cleaning unit.

As mentioned above, the pinion gears 602 of the cleaning unit 600 mesh with the racks 424 extending in the width direction. The cleaning unit 600 is controlled to travel in the width direction between a starting point (one end side of the filter) 471 and a turnaround point (the other end side of the filter) 472 in the width direction using the racks 424. The starting point 471 is a position close to the device side wall 421 in the inner space of the device housing 420. The starting point 471 is located within the parking area 452. The turnaround point 472 is a position close to an opposite side wall 425 in the inner space of the device housing 420. The opposite side wall 425 is one of the side walls of the device housing 420, which is opposite to the device side wall 421. The filter cleaning device 400 comprises four limit switches (LS) 461-464.

The first limit switch 461 is disposed on the inner surface of the device side wall 421 of the device housing 420 in the downstream side space 404. The first limit switch 461 is configured to detect whether the cylinder unit 660 is at the starting point 471.

The second limit switch 462 is disposed on the inner surface of the opposite side wall 425 in the downstream side space 404. The second limit switch 462 is configured to detect whether the cylinder unit 660 is at the turnaround point 472.

The third limit switch 463 is disposed on the inner surface of the device side wall 421 of the device housing 420 in the upstream side space 403. The third limit switch 463 is configured to detect whether the brush unit 620 is at the starting point 471.

The fourth limit switch 464 is disposed on the inner surface of the opposite side wall 425 in the upstream side space 403. The fourth limit switch 464 is configured to detect whether the brush unit 620 is at the turnaround point 472.

The positions of the first limit switch 461 and the third limit switch 463 are arranged so as to coordinate with the position of the cleaning unit 600 when the cleaning unit 600 is at the starting point 471 with the brush unit 620 and the cylinder unit 660 being in the ideal relative position.

The positions of the second limit switch 462 and the fourth limit switch 464 are also arranged so as to coordinate with the position of the cleaning unit 600 when the cleaning unit 600 is at the turnaround point 472 with the brush unit 620 and the cylinder unit 660 being in the ideal relative position.

In this embodiment, the starting point 471 of the cleaning unit 600 is the same as the parking position mentioned above.

As indicated by broken line arrows 104, 105 in Figs. 14 and 15, for each time of the cleaning operation, the cleaning unit 600 reciprocates along the filter 410. More specifically, the cleaning unit 600 is controlled to move forward after starting from the starting point 471 towards the turnaround point 472. Arriving at the turnaround point 472, the cleaning unit 600 is then controlled to perform a back-and-forth traveling for once or more times, starting from the turnaround point 472. After performing the back-and-forth traveling at the turnaround point 472, the cleaning unit 600 is controlled to move backward to the starting point 471. Arriving at the starting point 471, the cleaning unit 600 may be controlled to perform the back-and-forth traveling again for once or more times, starting from the starting point 471.

The back-and-forth traveling is a reciprocating movement over a predetermined distance which is much smaller than the travel distance of the cleaning unit 600. In the back-and-forth traveling at the turnaround point 472, the cleaning unit 600 moves backward and then moves forward. On the other hand, in the back-and-forth traveling at the starting point 471, the cleaning unit 600 moves forward and then moves backward.

In any case, as explained above, the brush 633 of the cleaning unit 600 is configured to rotate in the forward rotation direction when the cleaning unit 600 is moving forward, and rotate in the inverse rotation direction when the cleaning unit 600 is moving backward. Thus, when the cleaning unit 600 performs the back-and-forth traveling, the brush 633 also performs a back-and-forth rotation as shown in Figs. 11, 12 and 13.

The back-and-forth rotation is a reciprocating rotation over a predetermined angle. In the back-and-forth rotation at the turnaround point 472, the brush 633 rotates in the inverse rotation direction and then rotates in the forward rotation direction. On the other hand, in the back-and-forth rotation at the starting point 471, the brush 633 rotates in the forward rotation direction and then rotates in the inverse rotation direction.

The period that the cleaning unit 600 moves forward from the starting point 471 until the turnaround point 472 may be taken as a predetermined cleaning period. During the cleaning period, the particles are removed from the filter 410. By this performance, the particles adhering to the filter 410 are caught by the brush 633, and the caught particles are accumulated at the first comb 634a (see Figs. 9 to 13). Then, at the end of the cleaning period, the brush 633 rotates in the inverse rotation direction by performing the back-and-forth rotation. By this performance, the particles accumulated at the first comb 634a are transferred back by the brush 633 and caught by the first sub comb 638a. The particles caught by the first sub comb 638a fall into the storage space 626 of the cleaning unit 600. After performing the back-and-forth rotation, the cleaning unit 600 moves backward towards the starting point 471, i.e. the parking position.

The cleaning unit 600 is configured to engage the exhaust port 636 with the exhaust opening 441 arranged on the device side wall 421 so as to allow the storage space 626 to communicate with the exhaust opening 441 when the cleaning unit 600 is at the parking position.

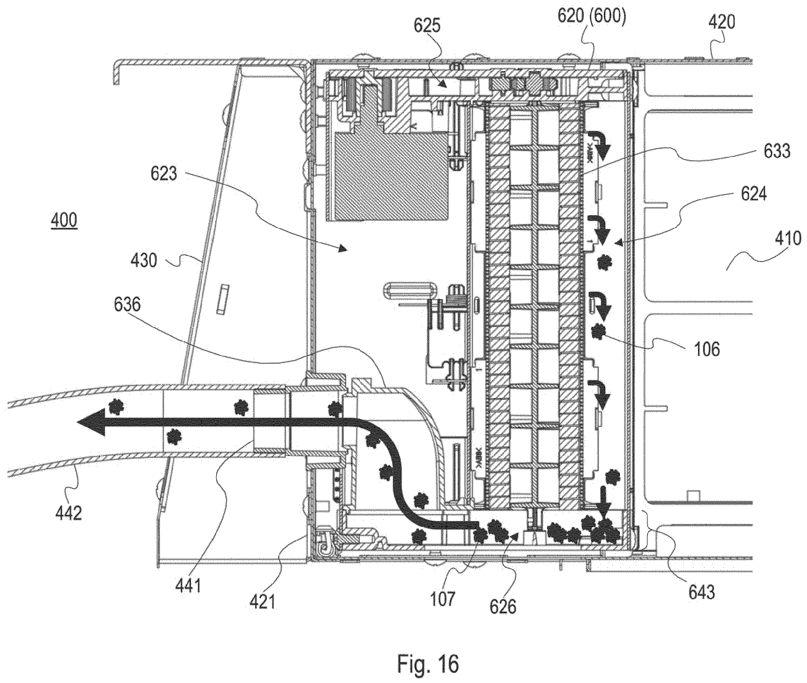

Fig. 16 is a partial vertical cross-sectional view of the filter cleaning device 400, indicating the transfer of the particles. More specifically, Fig. 16 shows a state of the vicinity part of the cleaning unit 600 along with the state of the movement of the particles when cross-sectioned at a central part of the brush unit 620 and viewed from the upstream side of the main air-flow.

The particles 106 removed from the filter 410 fall from the brush space 624 into the storage space 626 to be accumulated in the storage space 626. The structural part which forms a bottom surface of the brush unit 620 and the storage space 626 may be taken as a storage member 643 disposed under the brush 633 and configured to receive particles having fallen from the brush 633. The cleaning unit 600 is controlled to keep parking at the parking position while the filter cleaning device 400 is not performing the cleaning operation, i.e. when the filter cleaning device 400 is in non-use state. Thus, the exhaust port 636 is connected to the exhaust opening 441 of the device housing 420, allowing the storage space 626 to communicate with the suction socket 443 (see Fig. 2) via the exhaust opening 441 and the hose 442.

In this state, when an air suction is performed at the suction socket 443, the accumulated particles 107 in the storage space 626 are sucked out to the suction socket 443 via the exhaust port 636, the exhaust opening 441 and hose 442 to be discharged from the storage space 626.

### Functional Configuration of Filter Cleaning Device

The functional configuration of the inner air-conditioning unit 100, particularly for the function of removing particles adhering to the brush 633, is detailed hereinafter.

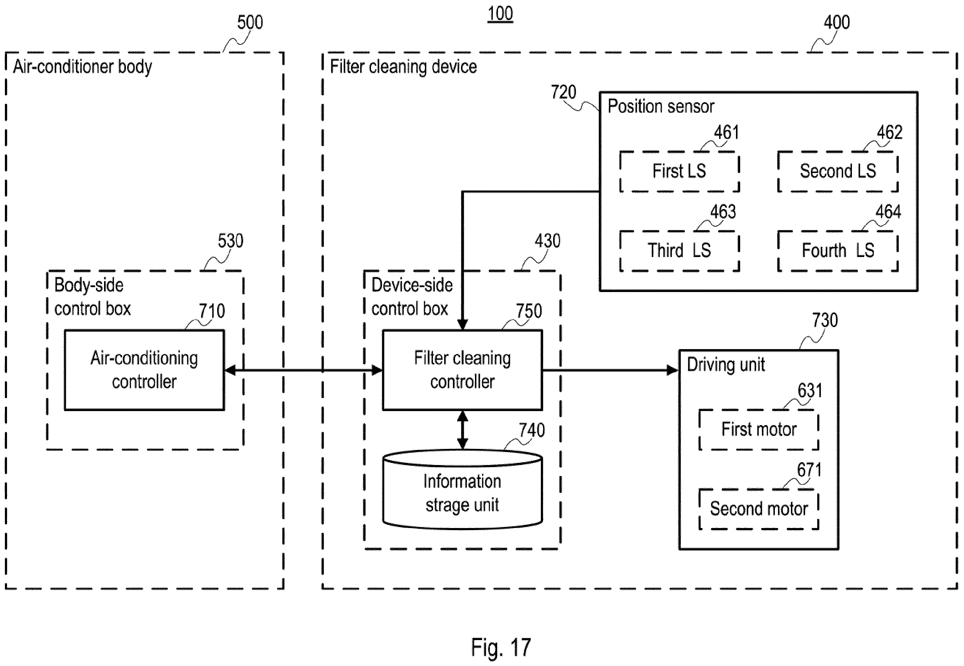

Fig. 17 is a block diagram indicating a functional configuration of the inner air-conditioning unit 100.

The inner air-conditioning unit 100 has an air-conditioning controller 710, a position sensor 720, a driving unit 730, an information storage unit 740 and a filter cleaning controller 750.

The air-conditioning controller 710 is disposed in the body-side control box 530 of the air-conditioner body 500. The function of the air-conditioning controller 710 is achieved by information processing and signal processing performed by the arithmetic circuit in the body-side control box 530.

The air-conditioning controller 710 is configured to execute the air-conditioning operation and transmit air-conditioner information to the filter cleaning controller 750. The air-conditioner information indicates whether the air-conditioning operation is currently performed. The air-conditioning controller 710 transmits the air-conditioner information by transmitting a signal to the filter cleaning controller 750.

The air-conditioning controller 710, for instance, transmits the air-conditioner information at predetermined intervals. The air-conditioning controller 710 may transmit the air-conditioner information at each time when the air-conditioning operation is started or ended. The air-conditioning controller 710 may transmit the air-conditioner information upon receiving a request for the air-conditioner information from the filter cleaning controller 750.

In addition, the air-conditioning controller 710 is configured to refrain from performing the air-conditioning operation when a request for refraining from performing the air-conditioning operation is made by the filter cleaning controller 750.

The position sensor 720 is disposed in the filter cleaning device 400. The position sensor 720 includes the first limit switch 461, the second limit switch 462, the third limit switch 463 and the fourth limit switch 464 (see Fig. 14).

The position sensor 720 is configured to detect each of the positions of the brush unit 620 and the cylinder unit 660 in the width direction. The position sensor 720 detects at least whether the brush unit 620 is at the starting point 471, whether the cylinder unit 660 is at the starting point 471, whether the brush unit 620 is at the turnaround point 472, and whether the cylinder unit 660 is at the turnaround point 472 (see Figs. 14 and 15).

The position sensor 720 is configured to transmit position information to the filter cleaning controller 750. The position information indicates the result of the detection made by the position sensor 720. The position sensor 720 transmits the position information by transmitting a signal to the filter cleaning controller 750. The position sensor 720, for instance, transmits the position information at predetermined intervals. The position sensor 720 may transmit the position information at each time when it is detected that the cleaning unit 600 is at the starting point 471 or the turnaround point 472. The position sensor 720 may transmit the position information upon receiving a request for the position information from the filter cleaning controller 750.

The driving unit 730 is disposed in the filter cleaning device 400. The driving unit 730 includes the first motor 631 and the second motor 671. As explained above, the first motor 631 and the second motor 671 are configured to generate forces for driving the brush unit 620 and the cylinder unit 660, respectively (see Figs. 7 and 8). The driving unit 730 may further include mechanical members, such as the gear mechanism 632, the cylinder-side gear mechanism 672 and so forth, which are used for driving the brush unit 620 and the cylinder unit 660.

The driving unit 730 is configured to move the cleaning unit 600 along the width direction between the starting point 471 and the turnaround point 472 while rotating the brush 633 about the rotation axis, under the control by the filter cleaning controller 750. The driving unit 730 rotates the brush 633 such that the bristles which are in contact with the filter 410 moves against the relative movement of the filter 410 with respect to the cleaning unit 600.

The information storage unit 740 is disposed in the device-side control box 430 of the filter cleaning device 400. The information storage unit 740 includes a memory area of the recording medium in the device-side control box 430. The information storage unit 740 is configured to store the control programs and the information necessary for the operation of the filter cleaning device 400.

The filter cleaning controller 750 is disposed in the device-side control box 430 of the filter cleaning device 400. The function of the filter cleaning controller 750 is achieved by information processing and signal processing performed by the arithmetic circuit in the device-side control box 430.

The filter cleaning controller 750 is configured to execute the operation of the filter cleaning device 400 according to the control programs and the information stored in the information storage unit 740. The filter cleaning controller 750 is especially configured to control the driving unit 730 such that the brush 633 rotates at least partially in the inverse rotation direction at the end of the cleaning period.

### Operation of Filter Cleaning Device

The operation of the filter cleaning device 400 is executed by the filter cleaning controller 750 performing a process.

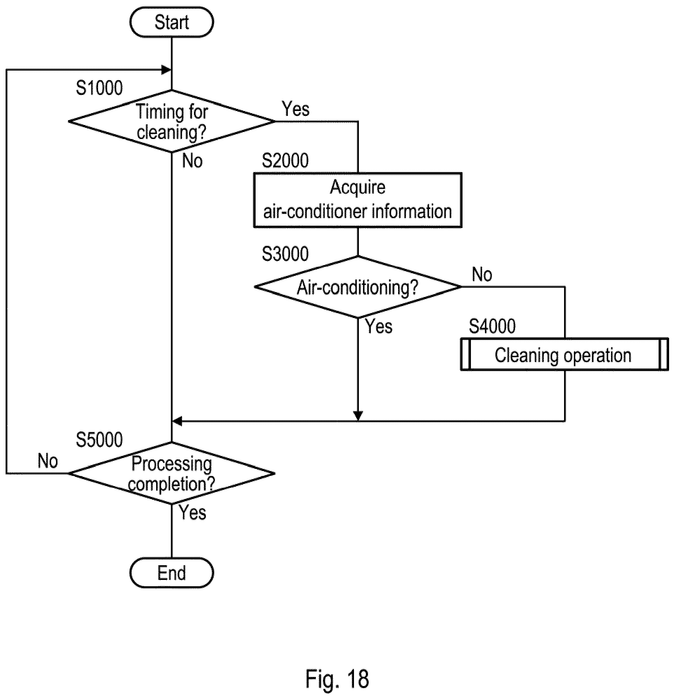

Fig. 18 is a flow chart indicating the process performed by the filter cleaning controller 750.

At step S1000, the filter cleaning controller 750 determines whether a timing for cleaning the filter 410 has arrived.

The timing for cleaning the filter 410 may a timing which comes at predetermined intervals, a timing when the air-conditioning operation is ended, or upon receiving a request for cleaning the filter 410. If a particle sensor is mounted on the filter cleaning device 400, the request for cleaning the filter 410 may be transmitted from the particle sensor. The particle sensor is, for instance, configured to detect whether the amount of the particles adhering to the filter 410 exceeds a predetermined level. The request for cleaning the filter 410 may be transmitted from a user interface or an information processing unit (both not shown) which is disposed in the distance.

When the timing for cleaning the filter 410 has not arrived (S1000: No), the filter cleaning controller 750 advances the process to step S5000 explained later. When the timing for cleaning the filter 410 has arrived (S1000: Yes), the filter cleaning controller 750 advances the process to step S2000.

At step S2000, the filter cleaning controller 750 acquires the air-conditioner information. The filter cleaning controller 750 may acquire the air-conditioner information by referring the air-conditioner information stored in the information storage unit 740, which is prestored by the filter cleaning controller 750 upon receiving the air-conditioner information. The filter cleaning controller 750 may acquire the air-conditioner information by transmitting a request for the air-conditioner information to the air-conditioning controller 710 and by receiving a response.

At step S3000, the filter cleaning controller 750 determines, based on the acquired air-conditioner information, whether the air-conditioning operation is currently performed. In other words, the filter cleaning controller 750 determines whether the air-conditioner body 500 is air-conditioning. When the air-conditioner body 500 is air-conditioning (S3000: Yes), the filter cleaning controller 750 advances the process to step S5000. When the air-conditioner body 500 is not air-conditioning (S3000: No), the filter cleaning controller 750 advances the process to step S4000.

At step S4000, the filter cleaning controller 750 executes the cleaning operation, and then advances the process to step S5000.

At step S5000, the filter cleaning controller 750 determines whether it is indicated to complete the process by the operator or the like. When it is not indicated to complete the process (S5000: No), the filter cleaning controller 750 returns the process to the step S1000. When it is not indicated to complete the process (S5000: Yes), the filter cleaning controller 750 completes the process.

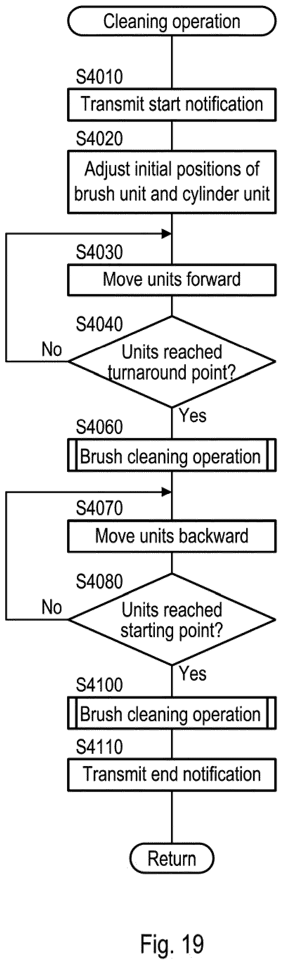

Fig. 19 is a flow chart indicating the process of the cleaning operation (Fig. 18, step S4000), performed by the filter cleaning controller 750.

At step S4010, the filter cleaning controller 750 transmits a start notification to the air-conditioning controller 710, as the request for refraining from performing the air-conditioning operation.

At step S4020, the filter cleaning controller 750 adjust initial positions of the brush unit 620 and cylinder unit 660 for the cleaning operation to the starting point 471 (see Figs. 14 and 15).

At step S4030, the filter cleaning controller 750 controls the driving unit 730 such that the brush unit 620 and the cylinder unit 660 move forward, i.e. in a direction away from the device side wall 421 in the width direction (rightward), in substantially the same predetermined speed.

At step S4040, the filter cleaning controller 750 determines whether both the brush unit 620 and cylinder unit 660 have reached the turnaround point 472 (see Figs. 14 and 15) according to the position information transmitted from the position sensor 720. When any one of the brush unit 620 and cylinder unit 660 has not reached the turnaround point 472 (S4040: No), the filter cleaning controller 750 returns the process to step the S4030. The period of time in which the steps S4030 and S4040 are repeated may be taken as the cleaning period mentioned above. When both the brush unit 620 and cylinder unit 660 has reached the turnaround point 472 (S4040: Yes), the filter cleaning controller 750 advances the process to step S4060.

At step S4060, the filter cleaning controller 750 performs a brush cleaning operation, and then advances the process to step S4070 explained later. The brush cleaning operation is an operation for removing the particles from the brush 633 by the back-and-forth rotation of the brush 633. However, the step S4060 may be skipped if it is not necessary. The brush cleaning operation will be detailed later.

At step S4070, the filter cleaning controller 750 controls the driving unit 730 such that the brush unit 620 and the cylinder unit 660 move backward, i.e. in a direction closer to the device side wall 421 in the width direction (leftward), in substantially the same predetermined speed.

At step S4080, the filter cleaning controller 750 determines whether both the brush unit 620 and cylinder unit 660 have reached the starting point 471 (see Figs. 14 and 15) according to the position information transmitted from the position sensor 720. When any one of the brush unit 620 and cylinder unit 660 has not reached the starting point 471 (S4080: No), the filter cleaning controller 750 returns the process to the step S4070. When both the brush unit 620 and the cylinder unit 660 have reached the starting point 471 (S4080: Yes), the filter cleaning controller 750 advances the process to step S4100.

At step S4100, the filter cleaning controller 750 performs the brush cleaning operation, and then advances the process to step S4110. However, the step S4100 may be skipped if it is not necessary.

At step S4110, the filter cleaning controller 750 transmits an end notification to the air-conditioning controller 710, as a cancellation of the request for refraining from performing the air-conditioning operation. Then the filter cleaning controller 750 returns the process to the step S5000 in Fig. 18. The parking position of the cleaning unit 600 is accordingly set to the starting point 471.

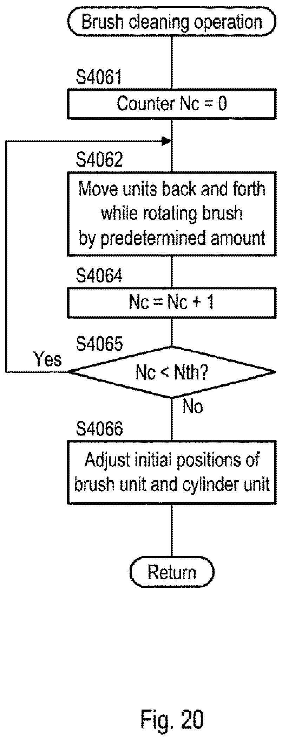

Fig. 20 is a flow chart indicating the process of the brush cleaning operation (Fig. 19, steps S4060 and S4100), performed by the filter cleaning controller 750.

At step S4061, the filter cleaning controller 750 sets a value "0" to a counter Nc. The counter Nc is a variable indicating the number of times that the back-and-forth rotation of the brush 633 has been performed at a corresponding one of the turnaround point 472 and the starting point 471.

At step S4062, the filter cleaning controller 750 controls the driving unit 730 to move the brush unit 620 and the cylinder unit 660 back and forth while rotating the brush 633 by a predetermined amount. In other words, the filter cleaning controller 750 controls the driving unit 730 such that the back-and-forth rotation of the brush 633 is performed.

The predetermined amount preferably corresponds to a predetermined rotation angle of the brush 633. The predetermined rotation angle of the brush 633 may be 360 degrees. By this, the back-and-forth rotation can be completed in a short time while allowing the whole bristles of the brush 633 to be combed by the combs 634.

Alternatively, when the process is in the step S4060 of Fig. 19, the predetermined rotation angle of the brush 633 may be equal to or a slightly more than the angle θa of the first particle-trap area 653a (see Fig. 10). By this, the back-and-forth rotation can be completed in a shorter time while allowing the particles accumulated at the first comb 634a to reach the first sub comb 638a. Likewise, when the process is in the step S4100 of Fig. 19, the predetermined rotation angle of the brush 633 may be equal to or a slightly more than the angle θb of the second particle-trap area 653b (see Fig. 10).

The information storage unit 740 may store the number of pulses for the first motor 631, which corresponds to the above predetermined rotation angle of the brush 633. In this case, the air-conditioning controller 710 may send a pulse signal of the stored number of pulses to the first motor 631.

At step S4064, the filter cleaning controller 750 increments the counter Nc by a value "1."

At step S4065, the filter cleaning controller 750 determines whether the counter Nc is smaller than a predetermined threshold Nth. The threshold Nth may be, for instance, a value "3." When the counter Nc is smaller than the threshold Nth (S4065: Yes), the filter cleaning controller 750 returns the process to the step S4062. When the counter Nc has reached the threshold Nth (S4065: No), the filter cleaning controller 750 advances the process to step S4066.

At step S4066, the filter cleaning controller 750 adjust initial positions of the brush unit 620 and cylinder unit 660 for the cleaning operation to a corresponding one of the starting point 471 and the turnaround point 472 (see Figs. 14 and 15).

Accordingly, the filter cleaning device 400 is configured to rotate the brush 633 alternately in both rotating directions after the cleaning period has passed.

### Advantageous Effect

As explained above, the filter cleaning device 400 has at least one comb-like member (the combs 634 and the sub combs 638) configured to comb the brush 633 by rotation of the brush 633 which removes particles from the filter 410, and is configured to rotate the brush 633 back and forth.

When the brush 633 rotates in a first rotation direction, the particles adhering to the filter 410 are caught by the brush 633 to be accumulated at the comb-like member. And, when the brush 633 rotates in a second rotation direction, the accumulated particles are transferred away from the comb-like member by the inverse rotation of the brush 633. This series of operations allows the filter cleaning device 400 to repeat the cleaning operation of the filter 410 while preventing excess accumulation of particles at the comb-like member. Thus, the function of the comb-like member can be maintained for long to allow the particles to be smoothly removed from the brush 633. Accordingly, the filter cleaning device 400 can clean the filter 410 more efficiently.

Moreover, the filter cleaning device 400 has the comb-like member configured to comb the brush 633 when the brush 633 rotates in the first rotation direction and the other comb-like member configured to comb the brush 633 when the brush 633 rotates in the second rotation direction. By this, it is possible to more efficiently remove the particles adhering to the brush 633.

Furthermore, the filter cleaning device 400 has at least one set of the comb 634 and the sub comb 638. The teeth of the comb 634 and the teeth of the sub comb 638 are inclined towards the opposite rotation directions of the brush 633, respectively. The particle-trap area in the surface of revolution of the brush 633, which is an area between the comb 634 and the sub comb 638 and towards which both the teeth of the comb 634 and the teeth of the sub comb 638 are inclined, is arranged within the brush space 624. With such a configuration, the particles which once transferred into the particle-trap area are difficult to be transferred outside of the brush space 624. Thus, the filter cleaning device 400 can remove the particles from the brush 633 and gather the particles into the storage space 626 more certainly.

Furthermore, the sub comb 638 is arranged so as to cover the clearance gap between the brush 633 and the brush-side wall 628. By this, the filter cleaning device 400 can prevent the particles leaking from the clearance gap.

Furthermore, the filter cleaning device 400 is configured to rotate the brush 633 back and forth after the cleaning period. By this, it is possible to further facilitate the removal of the particles adhering to the brush 633.

### Variations

The configuration of the inner air-conditioning unit according to the present embodiment explained above may be modified. Some examples of such modifications are mentioned below. The each of modification examples may be combined with one or more of the other modification examples.

The driving unit 730 may have individual motors for the travel of the brush unit 620, the rotation of the brush 633, and the travel of the cylinder unit 660. Alternatively, the driving unit 730 may be configured to drive both the brush unit 620 and the cylinder unit 660 by a single motor. In this case, the brush unit 620 and the cylinder unit 660 are connected to each other in a fixed manner across the filter 410.

The filter cleaning device 400 does not necessarily need to move the brush unit 620 in the second moving direction while rotating the brush 633 in the second rotation direction. Moreover, at a time other than the cleaning period, the filter cleaning device 400 does not necessarily need to move the brush unit 620 in the first moving direction while rotating the brush 633 in the first rotation direction.

The filter cleaning device 400 may rotate the brush 633 in the second rotation direction during the cleaning period. The filter cleaning device 400 also may rotate the brush 633 in the first rotation direction after the cleaning period. In any case, the filter cleaning device 400 may move the brush unit 620 while rotating the brush 633.

The filter cleaning device 400 does not necessarily need to move the cylinder unit 660 synchronously with the brush unit 620 at a time other than the cleaning period.

The number of times that the back-and-forth rotation of the brush 633 is performed during or at the end of the cleaning period is not limited to the number stated above. The filter cleaning device 400 also may perform the back-and-forth rotation of the brush 633 for a plurality of times during the cleaning period.

The rotation angle of the brush 633 in the first rotation direction and/or the second rotation direction at a time other than the cleaning period is not limited to the angles stated above. For instance, the filter cleaning device 400 may rotate the brush 633 by 720 degrees.

The rotation angle in the first rotation direction and the rotation angle in the second rotation direction in the back-and-forth rotation of the brush 633 are not necessarily the same.

The filter cleaning device 400 may change the rotation angle of the brush 633 according to predetermined information. The filter cleaning device 400 also may change the number of times of performing the back and forth rotation of the brush 633 according to predetermined information. The predetermined information may include timing of performing the rotation in the second rotation direction, frequency of performing the rotation in the second rotation direction, level of the amount of the particles having adhered to the filter 410 before performing the rotation in the second rotation direction, an inputted signal indicating the change in the rotation angle or the number of times, or the like.

The numbers of the brush 633, the comb 634 and the sub comb 638 are not limited to the numbers stated above. For instance, the filter cleaning device 400 may have a single set of the comb 634 and the sub comb 638. Alternatively, the filter cleaning device 400 may either one of the comb 634 and the sub comb 638, not the both. Moreover, the inclining angles of the teeth of the brush 633, the comb 634 and the sub comb 638 are not limited to the inclining angles stated above. For instance, the teeth of the comb 634 may be directed towards the axis 652 of the brush 633.

The configuration of the driving unit 730 is not limited to the above-explained configuration. For example, the driving unit 730 may include wheels for traveling on the inner bottom surface of the device housing 420, which are disposed in each of the brush unit 620 and the cylinder unit 660 and driven by the corresponding motors, respectively.

The first motor 631 and the second motor 671 may be disposed outside of the cleaning unit 600 and configured to drive the brush unit 620 and the cylinder unit 660 from outside. For example, the first motor 631 and the second motor 671 may be attached to the device housing 420 at positions near the device side wall 421 or the opposite side wall 425, and configured to rotate endless annular belts to which the brush unit 620 and the cylinder unit 660 are fixed. In this case, the brush 633 and the first and second separation rollers 635a, 635b may be driven by the movement of the brush unit 620 with respect to the filter 410.

The air-conditioner may be obliquely positioned with respect to a horizontal plane. For instance, when the false ceiling is an oblique ceiling, the air-conditioner may be obliquely positioned such that the housing bottom surface is substantially parallel with the false ceiling.

The filter cleaning device may be incorporated in the air-conditioner body. In this case, at least a part of the air-conditioner housing serves as the device housing. Alternatively, the filter cleaning device may be distanced from the air-conditioner body and connected to the air-conditioner body via a duct.

The filter cleaning controller may control the cleaning unit to reciprocate a plurality of times for one cleaning operation.

The filter cleaning controller may control the cleaning unit to move to the parking position upon receiving an indication transmitted from a user interface, an information processing unit or the like. In this case, the parking position does not necessarily need to be the same as the starting point of the cleaning unit.

The filter cleaning device may have a sensor which is configured to detect the accumulated particles state in the storage member 643, such as a photo-sensor, and output information indicating the detection result to a user interface, an information processing unit or the like. This configuration allows the operator to perform an evacuation of the accumulated particles at appropriate timings.

The cleaning unit may be configured to cover the brush-side opening with a lid while the cleaning unit is at the parking position. With this configuration, it is prevented that the accumulated particles in the storage space would leak from the brush-side opening.

The brush unit may have one of more than two separation rollers. Alternatively, the separation roller does not necessarily need to be provided in the brush unit.

The cylinder unit may have a counter member with a different shape, such as a plate configured to be in contact with the surface of the filter, instead of the cylinder. Alternatively, the cylinder unit does not necessarily need be provided in the filter cleaning device, if the pressure exerted on the filter by the brush unit is small.

The filter may have a shape curved in the width direction and/or the height direction. In the case where the filter curves in the width direction, the filter cleaning device is configured to move the cleaning unit in a line curved along the curved shape of the filter. In the case where the filter curves in the height direction, the cleaning unit has the brush and the counter member which have a shape curved along the curved shape of the filter.

The filter cleaning device may be configured to move the filter in the width direction instead of the cleaning unit. For instance, the filter may be a belt rotatably wound over two axial rods, and the cleaning unit may be fixed at a position close to one of the rods. The rods may be parallel, respectively vertically extending and positioned at the same height position. Alternatively, the filter cleaning device may be configured to move both the filter and the cleaning unit such that the relative position of the brush relative to the filter moves along the width direction.

The filter cleaning device may be configured to move the filter and/or the cleaning unit in a direction other than the width direction. For instance, the filter cleaning device may be move the filter and/or the cleaning unit in the height direction and rotate the brush about an axis extending in the width direction.

The filter cleaning controller may be arranged separately from the rest part of the filter cleaning device. For instance, the filter cleaning controller may be arranged in the control box of the air-conditioner body, or an information processing unit disposed away from the air conditioner. The filter cleaning controller may communicate with the parts to be controlled by the filter cleaning controller by means of wire communication and/or wireless communication.

The filter cleaning device may be applied to an air-conditioner which is not ceiling-mounted duct type.

While only selected embodiments and modifications have been chosen to illustrate the present invention, it will be apparent to those skilled in the art from this disclosure that various changes and further modifications can be made herein without departing from the scope of the invention as defined in the appended claims.

For example, unless specifically stated otherwise, the size, shape, location or orientation of the various components can be changed as needed and/or desired so long as the changes do not substantially affect their intended function. Unless specifically stated otherwise, components that are shown directly connected or contacting each other can have intermediate structures disposed between them so long as the changes do not substantially affect their intended function. The functions of one element can be performed by two, and vice versa unless specifically stated otherwise.

The structures and functions of one embodiment can be adopted in another embodiment. It is not necessary for all advantages to be present in a particular embodiment at the same time. Thus, the foregoing descriptions of the embodiments according to the present invention are provided for illustration only.

### Reference list

- 100:: Inner air-conditioning unit
- 210:: Building Slab
- 220:: False Ceiling
- 221:: Inlet Grating
- 222:: Outlet Grating
- 223:: Inspection Door
- 310:: Air Inlet Duct
- 320:: Air Outlet Duct
- 400:: Filter Cleaning Device
- 401:: Body Side Port
- 402:: Duct Side Port
- 410:: Filter
- 411:: Filter Frame
- 412:: Mesh Sheet
- 420:: Device Housing
- 421:: Device Side Wall
- 422:: Cover Wall
- 423:: Guide Rail
- 424:: Racks
- 425: Opposite Side Wall
- 430:: Device-Side Control Box
- 441:: Exhaust Opening
- 442:: Hose
- 443:: Suction Socket
- 444:: Back-Side Part
- 461:: First Limit Switch
- 462:: Second Limit Switch
- 463:: Third Limit Switch
- 464:: Fourth Limit Switch
- 500:: Air-Conditioner Body
- 501:: Air Inlet Port
- 502:: Air Outlet Port
- 503:: Fan
- 504:: Heat Exchanger
- 520:: Air-Conditioner Housing
- 521:: Body Side Wall
- 530:: Body-Side Control Box
- 600:: Cleaning Unit
- 601:: Wheels
- 602:: Pinion Gear
- 620:: Brush Unit
- 621:: Brush-Side Casing
- 622, 662:: Inner Wall
- 623:: Machine Space
- 624:: Brush Space
- 625:: Gear Space
- 626:: Storage Space
- 627:: Brush-Side Opening
- 628:: Brush-Side Wall
- 629:: Controller-Side Wall
- 631:: First Motor
- 632:: Gear Mechanism
- 633:: Brush
- 634:: Comb
- 635:: Separation Roller
- 636:: Exhaust Port
- 638:: Sub Comb
- 640:: Cylinder Unit
- 643:: Storage Member
- 660:: Cylinder Unit
- 661:: Cylinder-Side Casing
- 663:: Cylinder-Side Machine Space
- 664:: Cylinder Space
- 665:: Cylinder-Side Gear Space
- 666:: Lower Space
- 667:: Cylinder-Side Opening
- 668:: Brush-facing Side
- 671:: Second Motor
- 672:: Cylinder-Side Gear Mechanism
- 673:: Cylinder
- 710:: Air-Conditioning Controller
- 720:: Position Sensor
- 730:: Driving Unit
- 740:: Information Storage Unit
- 750:: Filter Cleaning Controller

## Claims

1. A filter cleaning device (400) for an air-conditioner, comprising:
a filter (410) having a filter surface and configured to pass an air flow through the filter surface;
a brush unit (620) having a brush and at least one comb-like member (634, 638),
the brush being configured to contact with the filter surface, and being rotatably supported about a rotation axis that extends along the filter surface, and
the at least one comb-like member being configured to comb bristles of the brush;
a driving unit (730) configured to rotate the brush about the rotation axis, and move at least one of the filter and the brush unit relative to each other such that a relative position of the brush relative to the filter moves along a first moving axis extending along the filter surface; and
a controller (750) configured to control the driving unit such that the relative position of the brush unit moves from one end side to the other end side of the filter with respect to the first moving axis within a predetermined cleaning period while the brush rotates in a first rotation direction,
wherein:
the rotation axis of the brush extends along a direction that intersects the first moving axis;
the controller is further configured to control the driving unit such that the brush rotates in a second rotation direction during or at the end of the cleaning period, the second rotation direction being opposite to the first rotation direction;
the at least one comb-like member has
a first comb-like member (634) the teeth of which are configured to engage with the bristles of the brush at a predetermined depth and a predetermined angle with respect to the axis of the brush, and
a second comb-like member (638) the teeth of which configured to engage with the bristles of the brush at a predetermined depth and a predetermined angle with respect to the axis of the brush; and
the teeth of the first comb-like member are configured to reach more deeply into the bristles of the brush than the teeth of the second comb-like member,
**characterized in that**
the teeth of the first comb-like member (634) are inclined towards the upstream side of the first rotation direction, and
the teeth of the second comb-like member (638) are inclined towards the upstream side of the second rotation direction.

2. The filter cleaning device according to claim 1, wherein
in the surface of revolution of the brush, the second comb-like member (638) is the nearest member, among the members engaging with the brush, with respect to the first comb-like member (634), in a direction towards which the teeth of the first comb-like member are oriented.

3. The filter cleaning device according to claim 1 or 2, wherein
at least one of the first comb-like member and the second comb-like member has a main comb and a corresponding sub comb, the main comb and the corresponding sub comb being spaced away on a surface of revolution of the brush, and
teeth of the main comb are configured to reach more deeply into the bristles of the brush than teeth of the corresponding sub comb.

4. The filter cleaning device according to any one of claims 1 to 3, wherein
the controller is configured to control the driving unit such that the brush completely rotates once at most in the second rotation direction.

5. The filter cleaning device according to any one of claims 1 to 4, wherein
the controller is configured to control the driving unit such that the brush alternately rotates in both rotating directions after the predetermined cleaning period has passed.

6. The filter cleaning device according to any one of claims 1 to 5, wherein
the controller is configured to rotate the brush in the second rotation direction at the end of the predetermined cleaning period.

7. The filter cleaning device according to any one of claims 1 to 6, wherein
the controller is further configured to control the driving unit such that:
the brush unit and the filter move in a first moving direction and second moving direction, respectively, along the first moving axis within the predetermined cleaning period while the brush rotates in a first rotation direction, the first moving direction and second moving direction being opposite, and
the brush unit and the filter move in the second moving direction and first moving direction, respectively, along the first moving axis after the cleaning period has passed.

8. The filter cleaning device according to claim 7, wherein
the controller is configured to control the driving unit such that the brush rotates in the second rotation direction while the brush unit and the filter move in the second moving direction and first moving direction, respectively.

9. The filter cleaning device according to any one of claims 1 to 8, wherein
the driving unit has a motor, and
the motor is configured to move the brush unit with respect to the filter, and rotate the brush.

10. The filter cleaning device according to claim 9, wherein
the driving unit is configured to rotate the brush in the first rotation direction while moving the brush unit in a first moving direction along the first moving axis, and rotate the brush in the second rotation direction while moving the brush unit in the second moving direction along the first moving axis.

11. An air-conditioner having the filter cleaning device according to any one of claims 1 to 10.

## Patentansprüche

1. Filterreinigungsvorrichtung (400) für eine Klimaanlage, mit:
einem Filter (410), das eine Filteroberfläche aufweist und konfiguriert ist, einen Luftstrom durch die Filteroberfläche strömen zu lassen;
einer Bürsteneinheit (620), die eine Bürste und mindestens ein kammförmiges Element (634, 638) aufweist,
wobei die Bürste konfiguriert ist, mit der Filteroberfläche in Kontakt zu treten, und drehbar um eine Drehachse gehalten wird, die sich längs der Filteroberfläche erstreckt, und
wobei das mindestens eine kammförmige Element konfiguriert ist, Borsten der Bürste zu kämmen;
einer Antriebseinheit (730), die konfiguriert ist, die Bürste um die Drehachse zu drehen und den Filter und/oder die Bürsteneinheit relativ zueinander zu bewegen, so dass sich eine Relativposition der Bürste relativ zum Filter längs einer ersten Bewegungsachse bewegt, die sich längs der Filteroberfläche erstreckt; und
einer Steuereinrichtung (750), die konfiguriert ist, die Antriebseinheit so zu steuern, dass sich die Relativposition der Bürsteneinheit bezüglich der ersten Bewegungsachse innerhalb einer vorgegebenen Reinigungsperiode von einer Endseite zur anderen Endseite des Filters bewegt, während sich die Bürste in eine erste Drehrichtung dreht,
wobei:
sich die Drehachse der Bürste längs einer Richtung erstreckt, die sich mit der ersten Bewegungsachse schneidet;
die Steuereinrichtung ferner konfiguriert ist, die Antriebseinheit so zu steuern, dass sich die Bürste während oder am Ende der Reinigungsperiode in eine zweite Drehrichtung dreht, wobei die zweite Drehrichtung zur ersten Drehrichtung entgegengesetzt ist;
das mindestens eine kammförmige Element aufweist:
ein erstes kammförmiges Element (634), dessen Zähne konfiguriert sind, mit einer vorgegebenen Tiefe und einem vorgegebenen Winkel bezüglich der Achse der Bürste mit den Borsten der Bürste in Eingriff zu treten, und
ein zweites kammförmiges Element (638), dessen Zähne konfiguriert sind, mit einer vorgegebenen Tiefe und einem vorgegebenen Winkel bezüglich der Achse der Bürste mit den Borsten der Bürste in Eingriff zu treten; und
die Zähne des ersten kammförmigen Elements konfiguriert sind, tiefer in die Borsten der Bürste zu reichen als die Zähne des zweiten kammförmigen Elements,
**dadurch gekennzeichnet, dass**
die Zähne des ersten kammförmigen Elements (634) zur vorgelagerten Seite der ersten Drehrichtung geneigt sind, und
die Zähne des zweiten kammförmigen Elements (638) zur vorgelagerten Seite der zweiten Drehrichtung geneigt sind.

2. Filterreinigungsvorrichtung nach Anspruch 1, wobei in der Umdrehungsfläche der Bürste das zweite kammförmige Element (638) bezüglich des ersten kammförmigen Elements (634) in eine Richtung, in die die Zähne des ersten kammförmigen Elements ausgerichtet sind, das nächstgelegene Element unter den Elementen ist, die mit der Bürste in Eingriff treten.

3. Filterreinigungsvorrichtung nach Anspruch 1 oder 2, wobei mindestens eines des ersten kammförmigen Elements und des zweiten kammförmigen Elements einen Hauptkamm und einen entsprechenden Nebenkamm aufweist, wobei der Hauptkamm und der entsprechende Nebenkamm auf einer Umdrehungsfläche der Bürste beabstandet sind, und
Zähne des Hauptkamms konfiguriert sind, tiefer in die Borsten der Bürste zu reichen als Zähne des entsprechenden Nebenkamms.

4. Filterreinigungsvorrichtung nach einem der Ansprüche 1 bis 3, wobei
die Steuereinrichtung konfiguriert ist, die Antriebseinheit so zu steuern, dass sich die Bürste höchstens einmal in die zweite Drehrichtung dreht.

5. Filterreinigungsvorrichtung nach einem der Ansprüche 1 bis 4, wobei
die Steuereinrichtung konfiguriert ist, die Antriebseinheit so zu steuern, dass sich die Bürste abwechselnd in beide Drehrichtungen dreht, nachdem die vorgegebene Reinigungsperiode verstrichen ist.

6. Filterreinigungsvorrichtung nach einem der Ansprüche 1 bis 5, wobei
die Steuereinrichtung konfiguriert ist, die Bürste am Ende der vorgegebenen Reinigungsperiode in die zweite Drehrichtung zu drehen.

7. Filterreinigungsvorrichtung nach einem der Ansprüche 1 bis 6, wobei die Steuereinrichtung ferner konfiguriert ist, die Antriebseinheit so zu steuern, dass:
sich die Bürsteneinheit und der Filter innerhalb der vorgegebenen Reinigungsperiode längs der ersten Bewegungsachse in eine erste Bewegungsrichtung bzw. in eine zweite Bewegungsrichtung bewegen, während sich die Bürste in eine erste Drehrichtung dreht, wobei die erste Bewegungsrichtung und die zweite Bewegungsrichtung entgegengesetzt sind, und
sich die Bürsteneinheit und der Filter längs der ersten Bewegungsachse in die zweite Bewegungsrichtung bzw. erste Bewegungsrichtung bewegen, nachdem die Reinigungsperiode verstrichen ist.

8. Filterreinigungsvorrichtung nach Anspruch 7, wobei die Steuereinrichtung konfiguriert ist, die Antriebseinheit so zu steuern, dass sich die Bürste in die zweite Drehrichtung dreht, während sich die Bürsteneinheit und der Filter in die zweite Bewegungsrichtung bzw. erste Bewegungsrichtung bewegen.

9. Filterreinigungsvorrichtung nach einem der Ansprüche 1 bis 8, wobei die Antriebseinheit einen Motor aufweist, und der Motor konfiguriert ist, die Bürsteneinheit bezüglich des Filters zu bewegen und die Bürste zu drehen.

10. Filterreinigungsvorrichtung nach Anspruch 9, wobei die Antriebseinheit konfiguriert ist, die Bürste in die erste Drehrichtung zu drehen, während sie die Bürsteneinheit längs der ersten Bewegungsachse in eine erste Bewegungsrichtung bewegt, und die Bürste in die zweite Drehrichtung zu drehen, während sie die Bürsteneinheit längs der ersten Bewegungsachse in die zweite Bewegungsrichtung bewegt.

11. Klimaanlage, die die Filterreinigungsvorrichtung nach einem der Ansprüche 1 bis 10 aufweist.

## Revendications

1. Dispositif de nettoyage (400) de filtre pour un climatiseur, comprenant :
un filtre (410) ayant une surface de filtrage et prévu pour le passage d'un flux d'air par la surface de filtrage ;
une unité de brosse (620) pourvue d'une brosse et d'au moins un élément en forme de peigne (634, 638),
la brosse étant prévue pour contacter la surface de filtrage et étant supportée de manière rotative autour d'un axe de rotation s'étendant le long de la surface de filtrage, et
ledit au moins un élément en forme de peigne étant prévu pour peigner les soies de la brosse ;
une unité d'entraînement (730) prévue pour entraîner la brosse en rotation autour de l'axe de rotation, et déplacer le filtre et l'unité de brosse l'une par rapport à l'autre de telle manière qu'une position relative de la brosse par rapport au filtre se déplace le long d'un premier axe de déplacement s'étendant sur la surface de filtrage ; et
un dispositif de commande (750) prévu pour commander l'unité d'entraînement de telle manière que la position relative de l'unité de brosse se déplace d'un côté d'extrémité à l'autre côté d'extrémité du filtre par rapport au premier axe de déplacement pendant une durée de nettoyage définie, la brosse tournant dans un premier sens de rotation,
où :
l'axe de rotation de la brosse s'étend dans une direction d'intersection du premier axe de déplacement ;
le dispositif de commande est en outre prévu pour commander l'unité d'entraînement de telle manière que la brosse tourne dans un deuxième sens de rotation pendant la durée de nettoyage ou à la fin de celle-ci, le deuxième sens de rotation étant opposé au premier sens de rotation ;
ledit au moins un élément en forme de peigne comporte un premier élément en forme de peigne (634) dont les dents sont prévues pour s'engrener avec les soies de la brosse sur une profondeur définie et suivant un angle défini par rapport à l'axe de la brosse, et
un deuxième élément en forme de peigne (638) dont les dents sont prévues pour s'engrener avec les soies de la brosse sur une profondeur définie et suivant un angle défini par rapport à l'axe de la brosse ; et
les dents du premier élément en forme de peigne sont prévues pour pénétrer dans les soies de la brosse plus profondément que les dents du deuxième élément en forme de peigne,
**caractérisé en ce que**
les dents du premier élément en forme de peigne (634) sont inclinées vers le haut du premier sens de rotation, et
les dents du deuxième élément en forme de peigne (638) sont inclinées vers le haut du deuxième sens de rotation.

2. Dispositif de nettoyage de filtre selon la revendication 1, où
sur la surface de révolution de la brosse, le deuxième élément en forme de peigne (638) est l'élément de plus proche des élément engrenés avec la brosse, par rapport au premier élément en forme de peigne (634), dans la direction d'orientation des dents du premier élément en forme de peigne.

3. Dispositif de nettoyage de filtre selon la revendication 1 ou la revendication 2, où
le premier élément en forme de peigne et/ou le deuxième élément en forme de peigne comprennent un peigne principal et un peigne auxiliaire correspondant, le peigne principal et le peigne auxiliaire correspondant étant espacés sur une surface de révolution de la brosse, et
les dents du peigne principal sont prévues pour pénétrer dans les soies de la brosse plus profondément que les dents du peigne auxiliaire correspondant.

4. Dispositif de nettoyage de filtre selon l'une des revendications 1 à 3, où
le dispositif de commande est prévu pour commander l'unité d'entraînement de telle manière que la brosse subit une rotation complète une fois au plus dans le deuxième sens de rotation.

5. Dispositif de nettoyage de filtre selon l'une des revendications 1 à 4, où
le dispositif de commande est prévu pour commander l'unité d'entraînement de telle manière que la brosse subit des rotations alternées dans les deux sens de rotation une fois terminée la durée de nettoyage définie.

6. Dispositif de nettoyage de filtre selon l'une des revendications 1 à 5, où
le dispositif de commande est prévu pour entraîner la brosse en rotation dans le deuxième sens de rotation à la fin de la durée de nettoyage définie.

7. Dispositif de nettoyage de filtre selon l'une des revendications 1 à 6, où le dispositif de commande est en outre prévu pour commander l'unité d'entraînement de telle manière que :
l'unité de brosse et le filtre se meuvent respectivement dans une première direction de déplacement et une deuxième direction de déplacement le long du premier axe de déplacement pendant la durée de nettoyage définie, la brosse tournant dans un premier sens de rotation, la première direction de déplacement et la deuxième direction de déplacement étant opposées, et
l'unité de brosse et le filtre se meuvent respectivement dans la deuxième direction de déplacement et la première direction de déplacement, le long du premier axe de déplacement une fois terminée la durée de nettoyage définie.

8. Dispositif de nettoyage de filtre selon la revendication 7, où
le dispositif de commande est prévu pour commander l'unité d'entraînement de telle manière que la brosse tourne dans le deuxième sens de rotation, l'unité de brosse et le filtre se mouvant respectivement dans la deuxième direction de déplacement et la première direction de déplacement.

9. Dispositif de nettoyage de filtre selon l'une des revendications 1 à 8, où l'unité d'entraînement comprend un moteur, et où
le moteur est prévu pour déplacer l'unité de brosse par rapport au filtre, et entraîner la brosse en rotation.

10. Dispositif de nettoyage de filtre selon la revendication 9, où
l'unité d'entraînement est prévue pour entraîner la brosse en rotation dans le premier sens de rotation, l'unité de brosse étant déplacée dans une première direction de déplacement le long du premier axe de déplacement, et entraîner la brosse en rotation dans le deuxième sens de rotation, l'unité de brosse étant déplacée dans la deuxième direction de déplacement le long du premier axe de déplacement.

11. Climatiseur (100), équipé du dispositif de nettoyage de filtre selon l'une des revendications 1 à 10.
